(19) Europäisches Patentamt
European Patent Office
Office européen des brevets

(11) EP 1 820 962 B1

(12) EUROPEAN PATENT SPECIFICATION

(45) Date of publication and mention of the grant of the patent:
**11.08.2010 Bulletin 2010/32**

(51) Int Cl.:
***F02N 11/08*** *(2006.01)* ***B60W 10/26*** *(2006.01)*

(21) Application number: **07101950.9**

(22) Date of filing: **08.02.2007**

(54) **Economical running control apparatus**

Sparsame Laufkontrollvorrichtung

Appareil contrôlant une marche économique

(84) Designated Contracting States:
**DE FR GB**

(30) Priority: **20.02.2006 JP 2006042577**

(43) Date of publication of application:
**22.08.2007 Bulletin 2007/34**

(73) Proprietor: **FUJITSU TEN LIMITED**
**Kobe-shi,**
**Hyogo (JP)**

(72) Inventor: **Yamaguchi, Kazuhi,**
**c/o Fujitsu Ten Limited**
**Hyogo (JP)**

(74) Representative: **Skone James, Robert Edmund**
**Gill Jennings & Every LLP**
**Broadgate House**
**7 Eldon Street**
**London EC2M 7LH (GB)**

(56) References cited:
**EP-A- 1 207 289**
**EP-A- 1 674 720**
**JP-A- 2004 003 460**
**JP-A- 2004 251 234**
**JP-A- 2005 020 854**
**JP-B2- 3 612 938**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 820 962 B1

## Description

The present invention relates to an economical running control apparatus and more particularly to an economical running control apparatus to perform an economical running in which an engine is automatically stopped when a predetermined engine stopping condition is established and the engine is automatically restarted when a predetermined engine restarting condition is established in a vehicle comprising a primary battery for supplying power to a vehicle mounted electric unit and a secondary battery for suppressing a voltage reduction of the primary battery when the engine is restarted.

There are some vehicles which are equipped with an economical running system in which the engine is automatically stopped when a predetermined engine stopping condition is established and the engine is automatically restarted when a predetermined engine restarting condition is established.

In these vehicles, although no power is generated when the engine is stopped while performing the economical running, the vehicle mounted electric unit such as an in-car audio system can be used. Therefore, the voltage reduction of the battery is expected. When the engine is restored from the economical running and restarted, the power supplied to the vehicle mounted electric unit is limited due to the voltage reduction of the battery. Therefore, it is considered that the vehicle mounted electric unit is reset or the engine cannot be restarted.

In Japanese Patent Publication No. 2002-115578A, in order to prevent the voltage reduction of the battery, a battery voltage value is measured so as to prohibit the engine from being automatically stopped and the economical running is not performed when the voltage reduction is large.

In addition, in Japanese Patent Publication No. 2004-251234A, a secondary battery (a capacitor) is installed on a vehicle for supplementing the voltage reduction of the primary buttery when the engine is restarted. The engine is prohibited from being automatically stopped and the economical running is not performed until the installed secondary battery restores a predetermined charged state.

In the above related-art economical running control systems the economical running is not performed when a dischargeable quantity of electricity is insufficient in the secondary battery, even though the dischargeable quantity of electricity of the primary battery is sufficient to perform the economical running. Therefore, opportunities for performing the economical running are decreased.

EP-A-1207289 describes a rotation control apparatus for an internal combustion engine which reduces the rotational speed of the crank shaft of the engine, and stops the tank shaft before the rotational speed reaches a resonant speed. In this way, the resonance and increased pressure in the combustion chamber of the internal combustion engine are prevented to reduce vibrations of a vehicle.

It is therefore an object of the invention to provide an economical running control system which can facilitates performing the economical running.

In order to achieve the above described objects, according to the invention, there is provided an economical running control apparatus operable to control an economical running in which an engine is automatically stopped when a predetermined engine stopping condition is established and the engine is automatically started when a predetermined engine starting condition is established, the economical running control apparatus adapted to be mounted on a vehicle including the engine, a first battery operable to supply power to an vehicle mounted electric unit, and a second battery operable to suppress a voltage reduction in the first battery when the engine is started, the economical running control apparatus comprising:

a judge operable to judge whether the economical running is permitted or prohibited based on a first quantity of electricity which the first battery is capable of discharging when the engine is started, a second quantity of electricity which the second battery is capable of discharging, when the engine is started and a third quantity of electricity required to comnpletely explode the engine;
characterized by
a first monitor operable to monitor a voltage value of the first battery, a current value of the first battery, and a fluid temperature of the first battery;
a second monitor operable to monitor a voltage value of the second battery, a currently value of the second battery, and an ambient temperature of the second battery;
a first calculator operable to calculate the first quantity of electricity based on the voltage value of the first battery, the current value of the first battery, and the fluid temperature of the first battery;
a second calculator operable to calculate the second quantity of electricity based on the voltage value of the second battery, the current value of the second battery, and the ambient temperature of the second battery; and
a third calculator operable to calculate a voltage reduction value of the first battery when the engine is completely exploded, and to calculate the third quantity of electricity based on the voltage reduction value.

With this configuration, since whether the economical running is permitted or prohibited is judged based on both the first and the second power quantities that the first and second batteries can discharge when the engine started, the economical running can be permitted when the second quantity of electricity is larger than a predetermined value, even though the first quantity of electricity is insufficient to perform the economical running. In addition, the economical running can be permitted when the first quantity of electricity of the primary battery larger than a predetermined value, even though the second quantity of electricity is insufficient to perform the economical running. Thus, the opportunities to perform the economical running are increased, whereby the fuel economy of the vehicle can be increased.

The above objects and advantages of the present invention will become more apparent by describing in detail preferred exemplary embodiments thereof with reference to the accompanying drawings, wherein:

Fig. 1 is a hardware block diagram of an economical running control system according to an embodiment of the present invention;
Fig. 2 is a hardware block diagram of an economical running control apparatus according to the embodiment;
Fig. 3 is a functional block diagram of the economical running control apparatus;
Fig. 4 is a flowchart showing a primary battery state detection process according to the embodiment;
Fig. 5 is a flowchart showing a battery internal resistance value update process according to the embodiment;
Fig. 6 is a diagram showing battery internal resistance value characteristic relative to battery fluid temperature;
Fig. 7 is a flowchart showing a primary battery capacity correction process according to the embodiment;
Fig. 8 is a diagram showing correction coefficient characteristic relative to battery fluid temperature;
Fig. 9 is a diagram showing correction coefficient characteristics relative to battery internal resistance value;
Fig. 10 is a flowchart showing a secondary battery state detection process according to the embodiment;
Fig. 11 is a diagram showing secondary battery capacity characteristics relative to secondary battery voltage value;
Fig. 12 is a diagram showing correction coefficient characteristics of secondary battery capacity relative to battery ambient temperature;
Fig. 13 is a flowchart showing a voltage reduction quantity calculation process according to the embodiment;
Fig. 14 is a flowchart showing a voltage reduction quantity update process according to the embodiment;
Fig. 15 is a flowchart showing a primary economical running permission determination process according to the embodiment;
Fig. 16 is a flowchart showing a secondary economical running permission determination process according to the embodiment;
Fig. 17 is a flowchart showing an capacity update process according to the embodiment; and
Fig. 18 is a flowchart showing an automatic engine restarting process according to the embodiment.

Hereinafter, an embodiment of the invention will be described in detail with reference to the accompanying drawings.

As shown in Fig. 1, the economical running control system includes an economical running control apparatus 10 for controlling and performing an economical running, and an alternator 11 for generating power when an engine is activated, a vehicle mounted electric unit 12, a primary battery 13 for supplying power to the vehicle mounted electric unit 12 and a secondary battery 14 (for example, a battery such as a capacitor) for suppressing voltage reduction in the primary battery 13 when the engine is restarted are connected to the economical running control apparatus 10 via a power supply line 15.

A voltage sensor 16 for detecting voltage, a current sensor 17 for detecting current and a temperature sensor 18 for detecting temperature are provided on the primary battery 13, and although not shown, output terminals of the voltage sensor 16, current sensor 17 and temperature sensor 18 are connected to the economical running control apparatus 10. In addition, a voltage sensor 19, a current sensor 20 and a temperature sensor 21 are provided on the secondary battery 14, and although not shown, output terminals of the voltage sensor 19, current sensor 20 and temperature sensor 21 are connected to the economical running control apparatus 10.

The vehicle mounted electric unit 12 is an electric unit installed on the vehicle and includes, for example, an electronic control unit for an engine control system and a brake control system and an in-car audio system.

Based on signals detected by the voltage sensor 16, the current sensor 17 and the temperature sensor 18 of the primary battery 13, and signals detected by the voltage sensor 19, the current sensor 20 and the temperature sensor 21 of the secondary battery 14, the economical running control apparatus 10 calculates a discharged quantity of electricity which is discharged from the primary battery 13 while the primary battery voltage value of the primary battery 13 changes by a predetermined voltage, a dischargeable quantity of electricity which the secondary battery 14 can discharge and a voltage reduction quantity in voltage value of the primary battery from a start of the engine to a complete explosion of the engine. The economical running control apparatus 10 determines whether the apparatus permits or prohibits an economical running based on results of the calculations.

As shown in Fig. 2, the economical running control apparatus 10 includes a microcomputer 30, and this microcomputer 30 is connected to a bus 31 within the economical running control apparatus 10 and is then connected to an exterior signal line 33 via an I/F (Interface) 32.

The microcomputer 30 has a CPU (Central Processing Unit) 34, and a ROM (Read Only Memory) 35 and a RAM (Random Access Memory) 36 are connected to the CPU 34 via a bus 37 within the microcomputer 30. In addition, the bus 31 is connected to the CPU 34 via the bus 37.

The CPU 34 controls the whole of the economical running control apparatus 10. Programs of an OS (Operating System) which is executed by the CPU 34 and at least a part of an application program are temporarily stored in the RAM 36. In addition, various data which is necessary for processing by the CPU 34 is stored in the RAM 36. The programs of the OS and the application program are stored in the ROM 35.

The application program includes programs for a primary battery state detection process, a secondary battery state detection process, a voltage reduction quantity calculation process and an economical running permission determination process which are executed by the economical running control apparatus 10.

As shown in Fig. 3, the economical running control apparatus 10 includes a primary battery monitoring unit 41 (first monitor), a secondary battery monitoring unit 42 (second monitor), a primary battery state detection unit 43 (first calculator), a secondary battery state detection unit 44 (second calculator), a voltage reduction quantity calculation unit 45 (third calculator) and an economical running permission determination unit 46 (judge).

The primary battery state monitoring unit 41 samples a primary battery voltage value, a primary battery current value and a battery fluid temperature of the primary battery 13 which are detected by the voltage sensor 16, the current sensor 17 and the temperature sensor 18, respectively. In addition, the secondary battery state monitoring unit 42 samples a secondary battery voltage value, a secondary battery current value and a battery ambient temperature of the secondary battery 14 which are detected by the voltage sensor 19, the current sensor 20 and the temperature sensor 21, respectively.

Based on results of the samplings, the primary battery state detection unit 43 calculates a primary battery capacity which indicates a discharged quantity of electricity (first quantity of electricity) that is discharged from the primary battery 13 while the primary battery voltage value changes by a predetermined voltage, the secondary battery state detection unit 44 obtains (or calculates) a secondary battery capacity which indicates a dischargeable quantity of electricity (second quantity of electricity) which the secondary battery 14 can discharge, and the voltage reduction quantity calculation unit 45 calculates a voltage reduction quantity (voltage reduction value) in voltage value of the primary battery from a start of the engine to a complete explosion of the engine.

Based on results of the calculations, the economical running permission determination unit 46 determines whether it permits or prohibits the economical running by comparing the electric quantities which can be supplied from the primary battery 13 and the secondary battery 14 for starting the engine with an quantity of electricity which is required between the start of the engine to the complete explosion of the engine.

As shown in Fig. 4, the primary battery state detection unit 43 executes a process in accordance with the following steps based on a primary battery state detection process program when the engine is started by driving a starter.

[Step S11] The CPU 34 determines whether or not the engine has been started by driving the starter. If the engine is determined to have been started through drive of the starter, the process proceeds to a step S12, whereas if the engine is determined otherwise, the primary battery state detection process ends.

[Step S12] The CPU 34 determines whether or not a predetermined period of time has elapsed since the engine was started. This is because a subsequent step needs to be delayed for the predetermined period of time since the start of the engine in order to avoid the sampling of an inrush current, which flows in an initial state of the engine start, as a primary battery current value. If the predetermined period of time is determined to have elapsed, the process proceeds to a step S14, whereas if determined otherwise, the process proceeds to a step S13.

[Step S13] The CPU 34 stores the current primary battery voltage value which resulted immediately after the engine was started as a starting voltage value V0 in order to compare it with a future primary battery voltage and waits for passage of the predetermined period of time.

[Step S14] The CPU 34 starts sampling primary battery voltage values and primary battery current values which have been detected by the voltage sensor 16 and the current sensor 17, respectively.

[Step S15] The CPU 34 calculates a variation in primary battery voltage value and a variation in primary battery current value from the primary battery voltage value and the primary battery current value which have been sampled this time and the primary battery voltage value and the primary battery current value which were sampled previously and calculates a battery internal resistance value Rn by diving the variation in primary battery voltage value by the variation in primary battery current value. Namely, , the battery internal resistance value Rn is calculated as below;

$$Rn = (Vnow - Vold)/(Inow - Iold) \quad \ldots. (1)$$

where, the primary battery voltage value and the primary battery current value which have been sampled this time are Vnow (V) and Inow (A), respectively, and the primary battery voltage value and the primary battery current value which were sampled previously are Vold (V) and Iold (A), respectively. This battery internal resistance value Rn, which is calculated individually for each sampling, is sequentially accumulated, and a value for a sum Rsum of those battery internal resistance values is obtained by the following equation;

$$Rsum = R0 + R1 + R2 + R3 + ... + Rn \qquad .... (2)$$

[Step S16] The CPU 34 calculates a discharged quantity of electricity Isum0 which has been discharged from the primary battery 13 since the predetermined period of time was determined to have elapsed in the processing in the step S12 until the current point in time, that is, calculates an accumulated value of primary battery current values.

[Step S17] The CPU 34 determines whether or not the primary battery voltage value V1 which was measured in the step S14 is larger than the starting voltage value V0 by a predetermined value V2. If the primary battery voltage value V1 is determined to be so larger, the process proceeds to a step S20, whereas if smaller, the process proceeds to a step S18.

[Step S18] The CPU 34 determines whether or not there has occurred the complete explosion of the engine. If the complete explosion is determined to have occurred, the process proceeds to the step S20, whereas if not, the process proceeds to a step S 19.

[Step S19] The CPU 34 determines whether or not a predetermined period of time has elapsed since the sampling was started. This is because when a state continues for the predetermined period of time in which there has occurred no complete explosion since the engine was started, there exists a possibility of occurrence of a problem that the engine has not yet been started and with such a problem, the primary battery state detection process needs to be ended. If the predetermined period of time is determined to have elapsed, the primary battery state detection process ends, whereas the predetermined period of time is determined otherwise, the process returns to the step S15.

In the steps that have been described heretofore, the sampling of the primary battery voltage value and primary battery current value, calculation of each of the battery internal resistance values and the sum thereof and calculation of the discharged quantity of electricity Isum0 are periodically performed until the difference between the current primary battery voltage value V1 and the starting voltage value V0 becomes the predetermined value V2 or the engine is completely exploded.

[Step S20] The CPU 34 calculates a primary battery capacity which indicates a discharged quantity of electricity that is discharged from the primary battery 13 while the primary battery voltage value changes by 1V by dividing the discharged quantity of electricity Isum0 calculated in the processing in the step S16 by a value which results when subtracting the starting voltage value V0 from the current primary battery voltage value V1. Namely, the primary battery capacity Cm (A sec/V) is calculated as follows;

$$Cm = a/(|V1 - V0|) \times Isum0 \qquad ... (3)$$

where, the current primary battery voltage value is V1 (V), the starting voltage value is V0 (V), and the discharged power is Isum0 (A sec),the constant a is a unit variation width of voltage in the primary battery 13, and here, a = 1.

[Step S21] The CPU 34 determines on a battery internal resistance value. In this embodiment, this battery internal resistance value is made to be a mean value obtained by dividing the value of the sum Rsum of battery internal resistance values which was calculated in the processing in the step S15 by the number n of samples. Of course, this battery internal resistance value may take a maximum value or a mode value, or the battery internal resistance value may be determined after deleting those of the battery internal resistance values which depart too far.

[Step S22] The CPU 34 stores the current battery fluid temperature as THB0 for comparison with a future battery fluid temperature.

With the processes that have been described heretofore, the primary battery capacity and the battery internal resistance value are obtained based on the primary battery voltage values and the primary battery current values which were measured since the start of the engine until the primary battery voltage value was recovered from the starting voltage value after the passage of the predetermined period of time or the engine is completely exploded, and finally, the battery fluid temperature is obtained, whereby the state of the primary battery 13 is detected.

Here, since the battery internal resistance value changes at all times to match changes in the primary battery current value and the battery fluid temperature, the battery internal resistance value so calculated needs to be updated by a battery internal resistance value which matches the changes.

Next, a battery internal resistance value updating process by the primary battery state detection unit 43 will be described.

As shown in Fig. 5, the primary battery state detection unit 43 repeatedly executes a process which follows steps below based on the primary battery state detection process program.

[Step S31] The CPU 34 determines whether or not an initial calculation of a battery internal resistance value has been completed. If determined to have been completed, the process proceeds to a step S32, whereas if determined otherwise, the battery internal resistance value updating process ends here.

[Step S32] The CPU 34 determines whether or not a difference between the current primary battery current value and the primary battery current value which resulted when the battery internal resistance value was determined is a predetermined value I0 or more. Note that here, when the primary battery current value has changed by the predetermined value I0 or more, the battery internal resistance value has been also changed to match the change of the primary battery current value, and therefore, the battery internal resistance value needs to be updated. If the difference is equal to or more than the predetermined value 10, the process proceeds to a step S33, whereas if the difference is less than the predetermined value 10, the process proceeds to a step S38.

[Step S33] The CPU 34 starts sampling primary battery voltage values and primary battery current values which have been detected by the voltage sensor 16 and the current sensor 17, respectively.

[Step S34] The CPU 34 calculates a battery internal resistance value Rn. This battery internal resistance value Rn (V/A) is calculated by the previously described equation (1). Following this, a value for a sum Rsum of the battery internal resistance values so calculated is then calculated by the previously described equation (2).

[Step S35] The CPU 34 determines whether or not a predetermined period of time has elapsed since the sampling was started. This determination is made due to the primary battery voltage and the primary battery current value being sampled at a predetermined period over the predetermined period of time. If the predetermined period of time is determined to have elapsed, the process proceeds to a step S36, whereas if the predetermined period of time is determined not to have elapsed, the process returns to the step S33.

In the steps heretofore, the sampling of the primary battery voltage value and primary battery current value and calculation of the individual battery internal resistance values and the sum thereof are implemented periodically until the predetermined period of time has elapsed since the engine was started.

[Step S36] The CPU 34 determines a battery internal resistance value. In this embodiment, this battery internal resistance value is made to be a mean value obtained by dividing the value of the sum Rsum of battery internal resistance values which was calculated in the processing in the step S34 by the number n of samples. Of course, this battery internal resistance value may take a maximum value or a mode value, or the battery internal resistance value may be determined after deleting those of the battery internal resistance values which depart too far.

[Step S37] The CPU 34 stores the current battery fluid temperature as THB0 for comparison with a future battery fluid temperature.

[Step S38] The CPU 34 determines whether or not a difference between the current battery temperature and the battery fluid temperature which resulted when the battery internal resistance value was determined is a predetermined value THB1 or more. Note that here, when the battery fluid temperature changes by the predetermined value THB1 or more, the battery internal resistance value has also been changed to match the change of the battery fluid temperature, and therefore, the battery internal resistance value needs to be updated. If the difference is determined to be equal to or more than the predetermined value THB1, the process proceeds to a step S39, whereas if the difference is determined to be less than the predetermined value THB1, the battery internal resistance value updating process ends.

Here, as is shown in Fig. 6, the primary battery 13 has temperature characteristics in which the battery internal resistance value changes to mach the change in the battery fluid temperature. This temperature characteristic data is stored in the ROM 35 in the form of a table in which the battery fluid temperature is related to the battery internal resistance.

[Step S39] The CPU 34 temporarily updates the battery internal resistance value by obtaining a battery internal resistance value which corresponds to the battery fluid temperature by referring to the temperature characteristic data.

The processing carried in this step S39 is such as to temporarily update the battery internal resistance value by a theoretical value in place of an actual value when the battery internal resistance value cannot be updated because the primary battery current value does not change irrespective of the fact that the battery fluid temperature is changing. For example, when a vehicle is driven at constant speeds for hours as when running on a highway, since the engine speed remains constant, the power generation quantity of the alternator 11 changes little, whereby the primary battery current value is made difficult to change, and this makes it difficult for the process to proceed to the step S36, the battery internal resistance value being thereby made difficult to be updated. In order to avoid a situation in which the battery internal resistance value is not updated when the battery fluid temperature changes largely in these situations, the battery internal resistance value is temporarily updated in the processing carried out in the step S39. Note that when the process can proceed to the step S36 in any of subsequent cycles to the temporary update after the battery internal resistance value has been temporarily updated, the battery internal resistance value is updated by an actual value which is available then.

With the processes described above, when the primary battery current value changes, the battery internal resistance value is updated in accordance with the change in the primary battery current value, and when the variation in the battery fluid temperature is large while the variation in the primary battery current value is small, the battery internal resistance value is updated to a battery internal resistance value which corresponds to the battery fluid temperature, so that the battery internal resistance value is designed to be updated to a most updated battery internal resistance value at all times.

Next, a primary battery capacity correcting process by the primary battery state detection unit 43 will be described.

As shown in Fig. 7, the primary battery state detection unit 43 executes repeatedly a process which follows steps below based on the primary battery state detection process program.

Here, since the primary battery 13 has the temperature characteristics, the primary battery capacity changes in such a manner as to match a change in the battery fluid temperature. In order to have the primary battery capacity match the change, the primary battery capacity needs to be corrected in accordance with the battery fluid temperature.

The primary battery 13 has a tendency that ions in the interior of the primary battery 13 get easier to be activated as the battery fluid temperature Tm increases, whereby the primary battery capacity is increased. Because of this, as is shown in Fig. 8, a correction coefficient for correction of the primary battery capacity is made to increase as the battery fluid temperature increases. This temperature characteristic data is stored in the ROM 35 in the form of a table in which the battery fluid temperature is related to the correction coefficient.

[Step S41] The CPU 34 determines whether or not a difference between the current battery fluid temperature and the battery fluid temperature which resulted when the primary battery capacity was calculated is the predetermined value THB1 or more. Here, if the change in the battery fluid temperature is equal to or more than the predetermined value THB1, since the primary battery capacity has changed to match the change in the battery fluid temperature, the process proceeds to a step S42 to correct the primary battery capacity, whereas if the change is less than the predetermined value THB1, the process proceeds to a step S44.

[Step S42] The CPU 34 obtains a correction coefficient of the primary battery capacity which corresponds to the battery fluid temperature by referring to the temperature characteristic data stored in advance in the ROM 35. Following this, the CPU 34 corrects the primary battery capacity by multiplying the primary battery capacity by the correction coefficient so obtained.

[Step S43] The CPU 34 stores the current battery fluid temperature as THB0 for comparison with a future battery fluid temperature.

Here, since the primary battery 13 has the characteristics in which the primary battery capacity changes with change in the battery internal resistance value, the primary battery capacity has been changed to match the change in the battery internal resistance value. In order to reflect the change in the primary battery capacity thereon, the primary battery capacity needs to be corrected in accordance with the battery internal resistance value.

The primary battery 13 has a tendency that the primary battery current value decreases as the battery internal resistance value Rm increases, whereby the primary battery capacity decreases. Because of this, as is shown in Fig. 9, a correction coefficient for correction of the primary battery capacity is made to decrease as the battery internal resistance value increases. This characteristic data is stored in the ROM 35 in the form of a table in which the battery internal resistance value is related to the correction coefficient.

[Step S44] The CPU 34 determines whether or not a difference between the current battery internal resistance value and the primary battery capacity which resulted when the primary battery capacity was calculated is a predetermined value R0 or more. Here, if the change in the battery internal resistance value is equal to or more than the predetermined value R0, since the primary battery capacity has been also changed to match the change in the battery internal resistance value, the process proceeds to a step S45 to correct the primary battery capacity, whereas if the change is less than the predetermined value R0, the primary battery capacity correction process ends.

[Step S45] The CPU 34 obtains a correction coefficient of the primary battery capacity which corresponds to the battery internal resistance value by referring to the characteristic data stored in advance in the ROM 35. Following this, the CPU 34 corrects the primary battery capacity by multiplying the primary battery capacity by the coefficient so obtained.

With the above processes, when battery fluid temperature changes largely, the primary battery capacity is corrected to a primary battery capacity which corresponds to the battery fluid temperature so changed, and when the battery internal resistance value changes largely with the battery fluid temperature changing little, the primary battery capacity is corrected to a primary battery capacity which corresponds to the battery internal resistance value so changed, whereby the primary battery capacity is designed to be corrected to a most updated primary battery capacity at all times.

Next, a process by the secondary battery state detection unit 44 will be described.

As shown in Fig. 10, the secondary battery state detection unit 44 executes repeatedly a process which follows steps below based on a secondary battery state detection process program.

[Step S51] The CPU 34 obtains a secondary battery voltage value detected by the voltage sensor 19.

[Step S52] The CPU 34 obtains a secondary battery capacity which indicates a dischargeable quantity of electricity that the secondary battery 14 can discharge. Namely, as is shown in Fig. 11, since the secondary battery 14 has a characteristic in which the secondary battery capacity changes with secondary battery voltage value Vs, the CPU 34 obtains (or calculates) a secondary battery capacity which corresponds to the secondary battery voltage obtained thereby by referring to the secondary battery's characteristic data stored in the ROM 35.

[Step S53] The CPU 34 obtains a secondary battery ambient temperature detected by the temperature sensor 21. This is because since the secondary battery 14 also has inconsiderably temperature characteristics, the secondary battery capacity needs to be corrected to match the secondary battery voltage value in accordance with the secondary battery ambient temperature. In addition, the temperature characteristic data is stored in the ROM 35.

[Step S54] The CPU 34 obtains a correction coefficient of the secondary battery capacity relative to the battery ambient temperature by referring to the ROM 35 and corrects the dischargeable quantity of electricity that the secondary battery 14 can discharge, that is, the secondary battery capacity by multiplying the secondary battery capacity obtained in the step S52 by the correction coefficient so obtained.

With the above processes, the state of the secondary battery 14 is detected by obtaining the secondary battery capacity which corresponds to the secondary battery voltage value and the battery ambient temperature.

Next, the voltage reduction quantity calculation unit 45 performs a calculation of a voltage reduction quantity of the primary battery 13 when the starter is driven. A necessary discharged quantity of electricity which is necessary when the starter is driven can be obtained from the voltage reduction quantity so calculated.

As shown in Fig. 13, the voltage reduction quantity calculation unit 45 executes a process in accordance with steps below based on a voltage reduction quantity calculation process program.

[Step S61] The CPU 34 stores the primary battery voltage value which resulted immediately before the engine was started as V3 for comparison with a future primary battery voltage value.

[Step S62] The CPU 34 determines whether or not the engine has been started by driving the starter. If determined to have been so started, the process proceeds to a step S63, whereas if determined otherwise, the voltage reduction quantity calculation process ends.

[Step S63] The CPU 34 starts sampling primary battery voltage values and primary battery current values which have been detected by the voltage sensor 16 and the current sensor 17, respectively.

[Step S64] The CPU 34 detects a maximum primary battery current value as Imax from the primary battery current values so sampled.

[Step S65] The CPU 34 detects a minimum voltage value as Vmin from the primary battery voltage values so sampled.

[Step S66] The CPU 34 calculates a discharged quantity of electricity Isum0 that has been discharged from the primary battery 13 since the engine was started until the current point in time.

[Step S67] The CPU 34 determines whether or not a complete explosion has been produced in the engine. If determined to have been produced, the process proceeds to a step S70, whereas if determined otherwise, the process proceeds to a step S68.

[Step S68] The CPU 34 determines whether or not a predetermined period of time has elapsed since the sampling was started. When a state that the engine is not completely exploded since the engine is started, continues for the predetermined period of time, there is a possibility of a problem that the starter is not driven properly. When such a problem really occurs, the voltage reduction quantity calculation process needs to end. Therefore, if the CPU 34 determines that the predetermined period of time has elapsed, the voltage reduction quantity calculation process ends, and if the CPU 34 determines that the predetermined period of time has not elapsed, the process proceeds to a step S69.

[Step S69] The CPU 34 determines whether or not the starter drive has been completed. The starter drive is implemented while the engine is started until the engine is completely exploded. In a case where the starter drive is completed although the engine is not completely exploded, there is a possibility of a problem that the starter is not driven properly. When such a problem really occurs, the voltage reduction quantity calculation process needs to end. When the engine is not completely exploded, if the CPU 34 determines that the starter drive has been completed, the voltage reduction quantity calculation process ends, and if the CPU 34 determines that the starter drive has been determined that the starter drive has not been completed yet, the process returns to the step S63.

[Step S70] The CPU 34 calculates an estimated value of a voltage reduction quantity of the primary battery voltage value by dividing the discharged quantity of electricity Isum0 by the primary battery capacity. Namely, an estimated value Vd1 (V) of a voltage reduction quantity of the primary battery voltage value is calculated as below;

$$Vd1 = Isum0/Cm \quad \ldots (4)$$

where, the primary battery capacity is Cm.

[Step S71] The CPU 34 calculates an actual value of the voltage reduction quantity of the primary battery voltage value by subtracting a minimum primary battery voltage value Vmin from the primary battery voltage value V3 which resulted immediately before the engine was started. Namely, , an actual value Vd2 of the voltage reduction quantity of the primary battery is calculated as bellow;

$$Vd_2 = V3 - Vmin \quad ...(5)$$

where, the primary battery voltage value V3 which resulted immediately before the engine was started is V3 (V) and the minimum primary battery voltage value is Vmin (V)

[Step S72] The CPU 34 determines on a voltage reduction quantity of the primary battery voltage value. This voltage reduction quantity is determined based on the estimated value of voltage reduction quantity calculated by the processing in the step S70 and the actual value of voltage reduction quantity calculated in the step S71. Here, a comparison is made between the estimated value of voltage reduction quantity calculated by the processing in the step S70 and the actual value of voltage reduction quantity calculated in the step S71, and a larger value is determined to be the voltage reduction quantity of the primary battery voltage value. Note that the voltage reduction quantity that is determined here may be a mean value of the estimated value of voltage reduction quantity and the actual value of voltage reduction quantity.

With the above processes, the maximum primary battery current value Imax that had been discharged from the primary battery 13 since the starter was driven until the starter drive was completed when the starter was driven and the voltage reduction quantity of the primary battery voltage value.

Here, since the voltage reduction quantity changes at all times with changes in the primary battery capacity and the battery internal resistance value, the voltage reduction quantity so calculated needs to be updated by a voltage reduction quantity which matches the changes in the primary battery capacity and the battery internal resistance value.

Next, a voltage reduction quantity update process by the voltage reduction quantity calculation unit 45 will be described.

As shown in Fig. 14, the voltage reduction quantity calculation unit 45 executes repeatedly a process in accordance with steps below based on the voltage reduction quantity calculation process program.

[Step S81] The CPU 34 determines whether or not a difference between the current primary battery capacity and the primary battery capacity which resulted when the voltage reduction quantity was calculated is equal to or more than a predetermined Cm1. Here, since when the primary battery capacity changes by the predetermined value Cm1 or more, the voltage reduction quantity of the primary battery voltage value has been also changed to match the change in the primary battery capacity, the voltage reduction quantity of the primary battery voltage value needs to be updated. When the difference is equal to or more than the predetermined value Cm1, the process proceeds to a step S82, whereas if the difference is less than the predetermined value Cm1, the process proceeds to a step S83.

[Step S82] The CPU 34 updates the voltage reduction quantity of the primary battery voltage value by recalculating a voltage reduction quantity of the primary battery voltage value by dividing the discharged current quantity Isum0 which resulted when the voltage reduction quantity was calculated by the current primary battery capacity.

[Step S83] The CPU 34 determines whether or not a difference between the current battery internal resistance value and the battery internal resistance value which resulted when the voltage reduction quantity was calculated is equal to or more than a predetermined value R1. Here, since when the battery internal resistance value changes by the predetermined value R1 or more, the voltage reduction quantity of the primary battery voltage value is understood to also have changed to match the change in the battery internal resistance value, the process of updating the voltage reduction quantity of the primary battery voltage value needs to be performed. If the difference is the predetermined value R1 or more, the process proceeds to a step S84, whereas if the difference is less than the predetermined value R1, the voltage reduction quantity update process ends.

[Step S84] The CPU 34 updates the voltage reduction quantity of the primary battery voltage value by multiplying the maximum primary battery current value Imax which resulted when the voltage reduction quantity was calculated by the current battery internal resistance value to thereby recalculate a voltage reduction quantity of the primary battery voltage value.

With the above processes, when the primary battery capacity has changed by the predetermined value Cm1 or more after the completion of starter drive or when the battery internal resistance value has changed by the predetermined value R1 or more while the primary battery capacity has not changed, the voltage reduction quantity of the primary battery voltage value that has already been calculated is updated, so as to be kept updated to the voltage reduction quantity corresponding to the current primary battery voltage value.

Based on the states of the primary battery and the secondary battery, which are obtained from the processes that have been described heretofore, the economical running permission determination unit 46 executes a determination process of whether an economical running is permitted or prohibited.

The economical running permission determination unit 46 contains a primary economical running permission determination process and/or a secondary economical running permission determination process program, and these programs are selected as required.

Firstly, a primary economical running permission determination process by the economical running permission determination unit 46 will be described.

As shown in Fig. 15, the economical running permission determination unit 46 executes repeatedly a process in accordance with steps below based on the economical running permission determination process program.

[Step S91] The CPU 34 calculates a necessary discharging quantity of electricity Ind0 which is to be discharged by the primary battery 13 when the starter is driven. This necessary discharging quantity of electricity Ind0 (A sec) is calculated by multiplying the voltage reduction quantity calculated in the processing in the step S72 by the primary battery capacity, and the necessary discharging quantity of electricity Ind0 is expressed as below;

$$Ind0 = Vd \times Cm \quad \ldots \quad (6)$$

where, the voltage reduction quantity of the primary battery voltage value is Vd (V).

[Step S92] The CPU 34 determines whether or not the necessary discharging quantity of electricity Ind0 is equal to or more than the secondary battery capacity (the dischargeable quantity of electricity of the secondary battery 14). If determined to be smaller, since the whole of the necessary discharging quantity of electricity that the primary battery 13 is to discharge can completely covered by the dischargeable quantity of electricity of the secondary battery 14, the process proceeds to a step S97, whereas if determined to be larger, the process proceeds to a step S93.

[Step S93] Since when the necessary discharging quantity of electricity Ind0 is equal to or more than the secondary battery capacity, the secondary battery 14 cannot completely assist the primary battery 13, the CPU 34 prohibits an economical running by the dischargeable quantity of electricity of the secondary battery 14.

[Step S94] The CPU 34 calculates an economical running permitting voltage threshold value V4 (threshold value) which can permit an economical running by a dischargeable quantity of electricity of the primary battery 13. This economical running permitting voltage threshold value V4 is calculated by adding the voltage reduction quantity calculated in the processing in the step S72 to a lowest voltage determination voltage value. It is determined that the primary battery voltage value cannot become lower than the lowest voltage determination voltage value when the starter is driven. Namely, the lowest voltage determination voltage value means a minimum value of the voltage value of the first battery.

[Step S95] The CPU 34 determines whether or not the primary battery voltage value is equal to or more than the economical running permitting voltage threshold value V4. If determined to be more, it means that the primary battery 13 itself holds the whole of the necessary discharging quantity of electricity that the primary battery 13 is to discharge, and the process proceeds to a step S96, whereas if determined to be smaller, the process proceeds to a step S98.

[Step S96] The CPU 34 cancels the prohibition of the economical running by the dischargeable quantity of electricity of the secondary battery 14.

[Step S97] The CPU 34 permits the economical running by the discharging quantity of electricity from the primary battery 13 or the economical running by the dischargeable quantity of electricity of the secondary battery 14.

[Step S98] The CPU 34 prohibits the economical running by the discharging quantity of electricity from the primary battery 13.

In this way, the economical running permission determination unit 46 firstly determines whether or not the engine can be restarted only by the secondary battery 14, and although the economical running by the secondary battery 14 is prohibited, when the primary battery voltage value is equal to or more than the economical running permitting voltage threshold value, the economical running permission determination unit 46 cancels the prohibition of the economical running by the secondary battery 14 so as to permit the economical running, whereby even though the economical running is permitted to stop the engine, since the primary battery 13 or the secondary battery 14 holds the necessary discharging quantity of electricity that is to be discharged by the primary battery 13 when the starter is driven, the restart of the engine can be ensured when attempting to restore the normal driving by the engine from the economical running.

Next, a secondary economical running permission determination process by the economical running permission determination unit 46 will be described.

As shown in Fig. 16, the economical running permission determination unit 46 executes repeatedly a process in accordance with steps below based on the economical running permission determination process program.

[Step S101] The CPU 34 calculates a necessary discharging quantity of electricity Ind0 that the primary battery 13 is to discharge when the starter is driven. This necessary discharging quantity of electricity Ind0 is calculated by multiplying the voltage reduction quantity calculated in the voltage reduction quantity calculation processing in the step 72 by the primary battery capacity.

[Step S102] The CPU 34 calculates an insufficient quantity of dischargeable power of the secondary battery 14 (fourth quantity of electricity) when the starter is driven. This insufficient quantity of dischargeable power is calculated by subtracting the secondary battery capacity (the dischargeable quantity of electricity of the secondary battery 14) which was calculated in the processing in the step 53 from the necessary discharging quantity of electricity Ind0.

[Step S103] The CPU 34 determines whether or not the insufficient quantity of dischargeable power is equal to or more than a predetermined value Ind1. If determined to be less, since the whole of the necessary discharging power amount that the primary battery 13 is to discharge can sufficiently be covered by the dischargeable quantity of electricity of the secondary battery 14, the process proceeds to a step S108, whereas if determined to be more, the process proceeds to a step S104.

[Step s104] Since when the insufficient quantity of dischargeable power is equal to or more than the predetermined value Ind1, the secondary battery 14 cannot sufficiently assist the primary battery 13, the CPU 34 prohibits the economical running by the dischargeable quantity of electricity of the secondary battery 14.

[Step S105] The CPU 34 calculates an economical running permitting voltage threshold value V5 (threshold value) which can permit an economical running by the discharging quantity of electricity of the primary battery 13. This economical running permitting voltage threshold value V5 is calculated by dividing the insufficient quantity of dischargeable quantity of electricity by the primary battery capacity and adding the lowest voltage determination voltage value to the result of the division. Namely, the economical running permitting voltage threshold value V5 (V) is calculated as below;

$$V5 = Vt + (If/Cm) \quad ... \quad (7)$$

where, the insufficient quantity of dischargeable power is If (A sec), the lowest voltage determination voltage value is Vt (V), the primary battery capacity is Cm.

[Step S106] The CPU 34 determines whether or not the primary battery voltage value is equal to or more than the economical running permitting voltage threshold value V5. If determined to be more, it means that the primary battery 13 and the secondary battery 14 hold the whole of the discharging quantity of electricity that the primary battery 13 is to discharge, and the process proceeds to a step s107, whereas if determined to be less, the process proceeds to a step S109.

[Step S107] The CPU 34 cancels the prohibition of the economical running by the dischargeable quantity of electricity of the secondary battery 14.

[Step S108] The CPU 34 permits the economical running by the discharging quantity of electricity of the primary battery 13 or the economical running by the dischargeable quantity of electricity of the secondary battery 14.

[Step S109] The CPU 34 prohibits the economical running by the discharging quantity of electricity of the primary battery 13.

In this way, the economical running permission determination unit 46 firstly determines from the insufficient quantity of dischargeable power whether or not the engine can be restarted only by the secondary battery 14, and even though the economical running by the secondary battery 14 is prohibited, when primary battery voltage value is equal to or more than the economical running permitting voltage threshold value, the economical running permission determination unit 46 cancels the prohibition of the economical running by the secondary battery 14 so as to permit the economical running, whereby even though the economical running is permitted to stop the engine, since the primary battery 13 or the secondary battery 14 holds the necessary discharging quantity of electricity that the primary battery 13 is to discharge when the starter is driven, the restart of the engine can be ensured when attempting to restore the normal driving by the engine from the economical running.

Next, an in-economical running capacity update process by the economical running permission determination unit 46 will be described.

As shown in Fig. 17, the economical running permission determination unit 46 executes repeatedly a process which follows steps below while the economical running is in operation based on the economical running permission determination program.

[Step S111] The CPU 34 determines whether or not the economical running is in operation. If determined to be in operation, the process proceeds to a step S 113, whereas if determined otherwise, the process proceeds to a process S 112.

[Step S112] The CPU 34 stores the primary battery voltage value which resulted before the economical running was put in operation as a starting voltage value V0 for comparison with a future primary battery value.

[Step S113] The CPU 34 calculates a battery internal resistance value Rn. This battery internal resistance value Rn (V/A) is calculated by the previously described equation (1). Following this, a value of a sum Rsum of the battery internal resistance values so calculated is then calculated by the previously described equation (2).

[Step S114] The CPU 34 calculates a battery internal resistance value Rn. This battery internal resistance value Rn (V/A) is calculated in the previously described equation (1). Following this, a value for a sum Rsum of battery internal resistance values is calculated in the previously described equation (2).

[Step S115] The CPU 34 calculates a discharged quantity of electricity Isum0 which has been discharged from the primary battery 13 since the sampling was started until the current point in time.

[Step S116] The CPU 34 determines whether or not a predetermined length of time has elapsed since the start of sampling. This is because the primary battery voltage value and the primary battery current value are sampled at a predetermined period over the predetermined length of time. If determined that the predetermined length of time has elapsed, the process proceeds to a step S117, whereas if determined that the predetermined length of time has not elapsed, the process returns to the step s113.

In the steps described heretofore, the sampling of the primary battery voltage value and primary battery current value, calculation of the individual battery internal resistance values and the sum thereof and calculation of the discharged quantity of electricity are designed to be implemented periodically.

[Step S117] The CPU 34 determines whether or not the primary battery voltage value V1 is larger than the starting voltage value V0 by a predetermined value V2. If determined to be larger, the necessity occurs of determining whether to permit or prohibit the continuation of economical running due to there being a large change in the primary battery voltage value, and the process proceeds to a step S118, whereas if determined to be smaller, the in-economical running capacity update process ends.

[Step S118] The CPU 34 calculates a primary battery capacity which indicates a discharged quantity of electricity which is discharged from the primary battery while the primary battery voltage value changes by 1V by dividing the discharged power amount Isum0 which was calculated in the processing in the step S115 by a value which results when subtracting the starting voltage value V0 from the current primary battery voltage value V1. This primary battery capacity Cm (A sec/V) is calculated by the previously described equation (3).

[Step S119] The CPU 34 determines on an battery internal resistance value. In this embodiment, this battery internal resistance value is made to be a mean value obtained by dividing the value of the sum Rsum of battery internal resistance values which was calculated in the processing in the step S114 by the number n of samples. Of course, this battery internal resistance value may take a maximum value or a mode value, or the battery internal resistance value may be determined after deleting those of the battery internal resistance values which depart too far.

[Step S120] The CPU 34 stores the current battery fluid temperature as THB0 for comparison with a future battery fluid temperature.

In the above processes, in such a situation that a decrease in the primary battery voltage value is expected during the implementation of economical running, when the primary battery voltage value is decreased to less than the predetermined value, the primary battery capacity and the battery internal resistance value are updated.

Next, an automatic engine restarting process by the economical running permission determination unit 46 will be described.

As shown in Fig. 18, the economical running permission determination unit 46 executes repeatedly a process which follows steps below while the economical running is in operation based on the economical running permission determination process program.

[Step S131] The CPU 34 determines whether or not the economical running is in operation. If determined that the economical running is in operation, the process proceeds to a step S132, whereas if determined otherwise, the automatic engine restarting process ends.

[Step S132] The CPU 34 determines whether or not the primary battery capacity is equal to or more than the economical running permitting voltage threshold value which was calculated in the processing in the step S94 or step S105. If determined to be more, it means that the primary battery 13 or the secondary battery 14 holds an quantity of electricity that is necessary from start of the engine to occurrence of a complete explosion in the engine, and the process proceeds to a step S133, whereas if determined to be less, the process proceeds to a step S134.

[Step S133] The CPU 34 permits the continuation of the economical running.

[Step S134] The CPU 34 prohibits the continuation of the economical running and forcibly restarts the engine.

With the above processes, when the primary battery voltage value is equal to or more than the economical running permitting voltage threshold value, the implementation of economical running is allowed to continue, whereas when the primary battery voltage value is less than the economical running permitting voltage threshold value, the engine is forcibly restarted, whereby as long as the primary battery 13 and the secondary battery 14 hold the sufficient quantity of electricity while the economical running is in operation, the economical running can continue.

Note that while in the description that has been made heretofore, the economical running control apparatus 10 is described as being configured as a single unit, the invention is not limited thereto and hence, a configuration may be adopted in which the economical running control apparatus 10 is integrated with the engine control system for controlling the engine. In addition, another configuration may be adopted in which a power supply management system for controlling the batteries and the alternator 11 is separated from the economical running control apparatus 10.

## Claims

1. An economical running control apparatus operable to control an economical running in which an engine is automatically stopped when a predetermined engine stopping condition is established and the engine is automatically started when a predetermined engine starting condition is established, the economical running control apparatus adapted to be mounted on a vehicle including the engine, a first battery operable to supply power to an vehicle mounted electric unit, and a second battery operable to suppress a voltage reduction in the first battery when the engine is started, the economical running control apparatus comprising:

   a judge operable to judge whether the economical running is permitted or prohibited based on a first quantity of electricity which the first battery is capable of discharging when the engine is started, a second quantity of electricity which the second battery is capable of discharging,
   when the engine is started and a third quantity of electricity required to completely explode the engine;
   **characterized by**
   a first monitor operable to monitor a voltage value of the first battery, a current value of the first battery, and a fluid temperature of the first battery;
   a second monitor operable to monitor a voltage value of the second battery, a current value of the second battery, and an ambient temperature of the second battery;
   a first calculator operable to calculate the first quantity of electricity based on the voltage value of the first battery, the current value of the first battery, and the fluid temperature of the first battery;
   a second calculator operable to calculate the second quantity of electricity based on the voltage value of the second battery, the current value of the second battery, and the ambient temperature of the second battery; and
   a third calculator operable to calculate a voltage reduction value of the first battery when the engine is completely exploded, and to calculate
   the third quantity of electricity based on the voltage reduction value.

2. The economical running control apparatus as set forth in claim 1, wherein:

   the judge operable to calculate the third quantity of electricity based on the voltage reduction value and the first quantity of electricity;
   when the third quantity of electricity is smaller than the second quantity of electricity, the judge permits the economical running to perform with the second battery; and
   when the third quantity of electricity is equal to or larger than the second quantity of electricity, the judge prohibits the economical running to perform with the second battery.

3. The economical running control apparatus as set forth in claim 2, wherein:

   when the voltage value of the first battery is larger than a threshold value, the judge permits the economical running to perform with the first battery.

4. The economical running control apparatus as set forth in claim 3, wherein:

   the judge operable to calculate the threshold value based on a minimum value of the voltage value of the first battery and the voltage reduction value of the first battery.

5. The economical running control apparatus as set forth in claim 1, wherein:

   the judge operable to calculate the third quantity of electricity based on the voltage reduction value and the first quantity of electricity;
   the judge operable to calculate a fourth quantity of electricity based on the third quantity of electricity and the second quantity of electricity;
   when the fourth quantity of electricity is smaller than a predetermined value, the judge permits the economical running to perform with the second battery; and
   when the fourth quantity of electricity is larger than a predetermined value, the judge prohibits the economical running to perform with the second battery.

6. The economical running control apparatus as set forth in claim 5, wherein:

when the voltage value of the first battery is larger than a threshold value, the judge permits the economical running to perform with the first battery.

**7.** The economical running control apparatus as set forth in claim 6, wherein:

the judge operable to calculate the threshold value based on a minimum value of the voltage value of the first battery, the fourth quantity of electricity, and the first quantity of electricity.

**8.** An economical running control method for controlling an economical running in which an engine is automatically stopped when a predetermined engine stopping condition is established and the engine is automatically started when a predetermined engine starting condition is established, the economical running control method for a vehicle which includes an engine, a first battery operable to supply power to a starter, and a second battery operable to additionally supply power to the first battery, if required, the economical running control method comprising:

judging whether the economical running is permitted or prohibited based on a first quantity of electricity which the first battery is capable of discharging when the engine is started, a second quantity of electricity which the second battery is capable of discharging when the engine is started, and a third quantity of electricity required to completely explode the engine; and **characterized by**
monitoring a voltage value of the first battery, a current value of the first battery, and a fluid temperature of the first battery;
monitoring a voltage value of the second battery, a current value of the second battery, and an ambient temperature of the second battery;
calculating the first quantity of electricity based on the voltage value of the first battery, the current value of the first battery, and the fluid temperature of the first battery;
calculating the second quantity of electricity based on the voltage value of the second battery, the current value of the second battery, and the ambient temperature of the second battery, and
calculating a voltage reduction value of the first battery when the engine is completely exploded and the third quantity of electricity based on the voltage reduction value.

## Patentansprüche

**1.** Wirtschaftliche Laufsteuerungsvorrichtung, betriebsfähig zum Steuern eines wirtschaftlichen Laufs, bei dem ein Motor automatisch gestoppt wird, wenn eine vorbestimmte Motor-Stoppbedingung hergestellt ist, und der Motor automatisch gestartet wird, wenn eine vorbestimmte Motor-Startbedingung hergestellt ist, wobei die wirtschaftliche Laufsteuerungsvorrichtung ausgebildet ist, auf einem den Motor aufweisenden Fahrzeug befestigt zu sein, eine erste Batterie betriebsfähig ist zum Zuführen von Energie zu einer Fahrzeug-montierten elektrischen Einheit und eine zweite Batterie betriebsfähig ist zum Unterdrücken einer Spannungsreduktion bei der ersten Batterie, wenn der Motor gestartet wird, wobei die wirtschaftliche Laufsteuerungsvorrichtung aufweist:

eine Entscheidungseinrichtung, betriebsfähig zum Entscheiden, ob der wirtschaftliche Lauf erlaubt oder verhindert ist, auf Basis einer ersten Elektrizitätsmenge, welche die erste Batterie zur Entladung fähig ist, wenn der Motor gestartet wird, einer zweiten Elektrizitätsmenge, welche die zweite Batterie zur Entladung fähig ist, wenn der Motor gestartet wird, und einer dritten Elektrizitätsmenge, die für ein vollständiges Explodieren im Motor erforderlich ist,
**gekennzeichnet durch**
einen ersten Monitor, betriebsfähig zur Überwachung eines Spannungswerts der ersten Batterie, eines Stromwerts der ersten Batterie und einer Fluidtemperatur der ersten Batterie,
einen zweiten Monitor, betriebsfähig zur Überwachung eines Spannungswerts der zweiten Batterie, eines Stromwerts der zweiten Batterie und einer Umgebungstemperatur der zweiten Batterie,
eine erste Berechnungseinrichtung, betriebsfähig zur Berechnung der ersten Elektrizitätsmenge auf Basis des Spannungswerts der ersten Batterie, des Stromwerts der ersten Batterie und der Fluidtemperatur der ersten Batterie,
eine zweite Berechnungseinrichtung, betriebsfähig zur Berechnung der zweiten Elektrizitätsmenge auf Basis des Spannungswerts der zweiten Batterie, des Stromwerts der zweiten Batterie und der Umgebungstemperatur der zweiten Batterie, und
eine dritte Berechnungseinrichtung, betriebsfähig zur Berechnung eines Spannungsreduktionswerts der ersten Batterie, wenn im Motor vollständig explodiert wird, und zur Berechnung der dritten Elektrizitätsmenge auf Basis des Spannungsreduktionswerts.

2. Wirtschaftliche Laufsteuerungsvorrichtung nach Anspruch 1, wobei:

die Entscheidungseinrichtung betriebsfähig ist zur Berechnung der dritten Elektrizitätsmenge auf Basis des Spannungsreduktionswerts und der ersten Elektrizitätsmenge,
wenn die dritte Elektrizitätsmenge kleiner als die zweite Elektrizitätsmenge ist, die Entscheidungseinrichtung den wirtschaftlichen Lauf mit der zweiten Batterie auszuführen erlaubt, und
wenn die dritte Elektrizitätsmenge gleich oder größer als die zweite Elektrizitätsmenge ist, die Entscheidungseinrichtung den wirtschaftlichen Lauf mit der zweiten Batterie auszuführen verhindert.

3. Wirtschaftliche Laufsteuerungsvorrichtung nach Anspruch 2, wobei:

wenn der Spannungswert der ersten Batterie größer als ein Schwellenwert ist, die Entscheidungseinrichtung den wirtschaftlichen Lauf mit der ersten Batterie auszuführen erlaubt.

4. Wirtschaftliche Laufsteuerungsvorrichtung nach Anspruch 3, wobei:

die Entscheidungseinrichtung betriebsfähig ist zur Berechnung des Schwellenwerts auf Basis eines Minimumwerts des Spannungswerts der ersten Batterie und des Spannungsreduktionswerts der ersten Batterie.

5. Wirtschaftliche Laufsteuerungsvorrichtung nach Anspruch 1, wobei:

die Entscheidungseinrichtung betriebsfähig ist zur Berechnung der dritten Elektrizitätsmenge auf Basis des Spannungsreduktionswerts und der ersten Elektrizitätsmenge,
die Entscheidungseinrichtung betriebsfähig ist zur Berechnung einer vierten Elektrizitätsmenge auf Basis der dritten Elektrizitätsmenge und der zweiten Elektrizitätsmenge,
wenn die vierte Elektrizitätsmenge kleiner ist als ein vorbestimmter Wert, die Entscheidungseinrichtung den wirtschaftlichen Lauf mit der zweiten Batterie auszuführen erlaubt, und,
wenn die vierte Elektrizitätsmenge größer als ein vorbestimmter Wert ist, die Entscheidungseinrichtung den wirtschaftlichen Lauf mit der zweiten Batterie auszuführen verhindert.

6. Wirtschaftliche Laufsteuerungsvorrichtung nach Anspruch 5, wobei:

wenn der Spannungswert der ersten Batterie größer als ein Schwellenwert ist, die Entscheidungseinrichtung den wirtschaftlichen Lauf mit der ersten Batterie auszuführen erlaubt.

7. Wirtschaftliche Laufsteuerungsvorrichtung nach Anspruch 6, wobei:

die Entscheidungseinrichtung betriebsfähig ist zur Berechnung des Schwellenwerts auf Basis eines Minimumwerts des Spannungswerts der ersten Batterie, der vierten Elektrizitätsmenge und der ersten Elektrizitätsmenge.

8. Wirtschaftliches Laufsteuerungsverfahren zum Steuern eines wirtschaftlichen Laufs, bei dem ein Motor automatisch gestoppt wird, wenn eine vorbestimmte Motor-Stoppbedingung hergestellt ist, und die Motor automatisch gestartet wird, wenn eine vorbestimmte Motor-Startbedingung hergestellt ist, das wirtschaftliche Laufsteuerungsverfahren für ein Fahrzeug ist, das einen Motor aufweist, eine erste Batterie betriebsfähig ist zum Zuführen von Energie zu einem Anlasser und eine zweite Batterie betriebsfähig ist zum zusätzlichen Zuführen von Energie, wenn erforderlich, zur ersten Batterie, wobei das wirtschaftliche Laufsteuerungsverfahren aufweist:

Entscheiden, ob der wirtschaftliche Lauf erlaubt oder verhindert ist, auf Basis einer ersten Elektrizitätsmenge, welche die erste Batterie zur Entladung fähig ist, wenn die Motor gestartet wird, einer zweiten Elektrizitätsmenge, welche die zweite Batterie zur Entladung fähig ist, wenn die Motor gestartet wird, und einer dritten Elektrizitätsmenge die zu einem vollständigen Explodieren im Motor erforderlich ist, und **gekennzeichnet durch**
Überwachen eines Spannungswerts der ersten Batterie, eines Stromwerts der ersten Batterie und einer Fluidtemperatur der ersten Batterie,
Überwachen eines Spannungswerts der zweiten Batterie, eines Stromwerts der zweiten Batterie und einer Umgebungstemperatur der zweiten Batterie,
Berechnen der ersten Elektrizitätsmenge auf Basis des Spannungswerts der ersten Batterie, des Stromwerts der ersten Batterie und der Fluidtemperatur der ersten Batterie,
Berechnen der zweiten Elektrizitätsmenge auf Basis des Spannungswerts der zweiten Batterie, des Stromwerts der zweiten Batterie und der Umgebungstemperatur der zweiten Batterie, und
Berechnen eines Spannungsreduktionswerts der ersten Batterie, wenn im Motor vollständig explodiert wird, und der dritten Elektrizitätsmenge auf Basis des Spannungsreduktionswerts.

**Revendications**

1. Dispositif de commande de fonctionnement économique pouvant être utilisé pour commander un fonctionnement économique dans lequel un moteur à combustion interne est arrêté automatiquement lorsqu'une condition d'arrêt de moteur à combustion interne prédéterminée est établie et le moteur à combustion interne est automatiquement démarré lorsqu'une condition de démarrage de moteur à combustion interne prédéterminée est établie, le dispositif de commande de fonctionnement économique étant adapté pour être monté sur un véhicule comprenant le moteur à combustion interne, une première batterie pouvant être utilisée pour alimenter une unité électrique montée sur le véhicule, et une deuxième batterie pouvant être utilisée pour éviter une réduction de tension dans la première batterie lorsque le moteur à combustion interne est démarré, le dispositif de commande de fonctionnement économique comprenant :

   un juge pouvant être utilisé pour juger si le fonctionnement économique est autorisé ou interdit sur la base d'une première quantité d'électricité que la première batterie est capable de décharger lorsque le moteur à combustion interne est démarré, d'une deuxième quantité d'électricité que la deuxième batterie est capable de décharger lorsque le moteur à combustion interne est démarré et d'une troisième quantité d'électricité nécessaire à l'explosion complète du moteur à combustion interne ;
   **caractérisé par**
   un premier moniteur pouvant être utilisé pour surveiller une valeur de tension de la première batterie, une valeur de courant de la première batterie, et une température de fluide de la première batterie ;
   un deuxième moniteur pouvant être utilisé pour surveiller une valeur de tension de la deuxième batterie, une valeur de courant de la deuxième batterie, et une température ambiante de la deuxième batterie ;
   un premier calculateur pouvant être utilisé pour calculer la première quantité d'électricité sur la base de la valeur de tension de la première batterie, de la valeur de courant de la première batterie et de la température de fluide de la première batterie ;
   un deuxième calculateur pouvant être utilisé pour calculer la deuxième quantité d'électricité sur la base de la valeur de tension de la deuxième batterie, de la valeur de courant de la deuxième batterie et de la température ambiante de la deuxième batterie ; et
   un troisième calculateur pouvant être utilisé pour calculer une valeur de réduction de tension de la première batterie lorsque l'explosion du moteur à combustion interne est complète, et pour calculer la troisième quantité d'électricité sur la base de la valeur de réduction de tension.

2. Dispositif de commande de fonctionnement économique selon la revendication 1, dans lequel :

   le juge peut être utilisé pour calculer la troisième quantité d'électricité sur la base de la valeur de réduction de tension et de la première quantité d'électricité ;
   lorsque la troisième quantité d'électricité est inférieure à la deuxième quantité d'électricité, le juge permet que le fonctionnement économique s'effectue avec la deuxième batterie ; et
   lorsque la troisième quantité d'électricité est égale ou supérieure à la deuxième quantité d'électricité, le juge interdit que le fonctionnement économique s'effectue avec la deuxième batterie.

3. Dispositif de commande de fonctionnement économique selon la revendication 2, dans lequel :

   lorsque la valeur de tension de la première batterie est supérieure à une valeur de seuil, le juge permet que le fonctionnement économique s'effectue avec la première batterie.

4. Dispositif de commande de fonctionnement économique selon la revendication 3, dans lequel :

   le juge peut être utilisé pour calculer la valeur de seuil sur la base d'une valeur minimum de la valeur de tension de la première batterie et de la valeur de réduction de tension de la première batterie.

**5.** Dispositif de commande de fonctionnement économique selon la revendication 1, dans lequel :

le juge peut être utilisé pour calculer la troisième quantité d'électricité sur la base de la valeur de réduction de tension et de la première quantité d'électricité ;
le juge peut être utilisé pour calculer une quatrième quantité d'électricité sur la base de la troisième quantité d'électricité et de la deuxième quantité d'électricité ;
lorsque la quatrième quantité d'électricité est inférieure à une valeur prédéterminée, le juge permet que le fonctionnement économique s'effectue avec la deuxième batterie ; et
lorsque la quatrième quantité d'électricité est supérieure à une valeur prédéterminée, le juge interdit que le fonctionnement économique s'effectue avec la deuxième batterie.

**6.** Dispositif de commande de fonctionnement économique selon la revendication 5, dans lequel :

lorsque la valeur de tension de la première batterie est supérieure à une valeur de seuil, le juge permet que le fonctionnement économique s'effectue avec la première batterie.

**7.** Dispositif de commande de fonctionnement économique selon la revendication 6, dans lequel :

le juge peut être utilisé pour calculer la valeur de seuil sur la base d'une valeur minimum de la valeur de tension de la première batterie, de la quatrième quantité d'électricité et de la première quantité d'électricité.

**8.** Procédé de commande de fonctionnement économique pour commander un fonctionnement économique dans lequel un moteur à combustion interne est arrêté automatiquement lorsqu'une condition d'arrêt de moteur à combustion interne prédéterminée est établie et le moteur à combustion interne est démarré automatiquement lorsqu'une condition de démarrage de moteur à combustion interne prédéterminée est établie, le procédé de commande de fonctionnement économique étant destiné à un véhicule qui comprend un moteur à combustion interne, une première batterie pouvant être utilisée pour alimenter un démarreur, et une deuxième batterie pouvant être utilisée pour alimenter en plus la première batterie, si nécessaire, le procédé de commande de fonctionnement économique consistant à :

juger si le fonctionnement économique est autorisé ou interdit sur la base d'une première quantité d'électricité que la première batterie est capable de décharger lorsque le moteur à combustion interne est démarré, d'une deuxième quantité d'électricité que la deuxième batterie est capable de décharger lorsque le moteur à combustion interne est démarré, et d'une troisième quantité d'électricité nécessaire à l'explosion complète du moteur à combustion interne ; et **caractérisé par** les étapes consistant à :

surveiller une valeur de tension de la première batterie, une valeur de courant de la première batterie, et une température de fluide de la première batterie ;
surveiller une valeur de tension de la deuxième batterie, une valeur de courant de la deuxième batterie, et une température ambiante de la deuxième batterie ;
calculer la première quantité d'électricité sur la base de la valeur de tension de la première batterie, de la valeur de courant de la première batterie et de la température de fluide de la première batterie ;
calculer la deuxième quantité d'électricité sur la base de la valeur de tension de la deuxième batterie, de la valeur de courant de la deuxième batterie et de la température ambiante de la deuxième batterie ; et
calculer une valeur de réduction de tension de la première batterie lorsque l'explosion du moteur à combustion interne est complète et la troisième quantité d'électricité sur la base de la valeur de réduction de tension.

FIG. 1

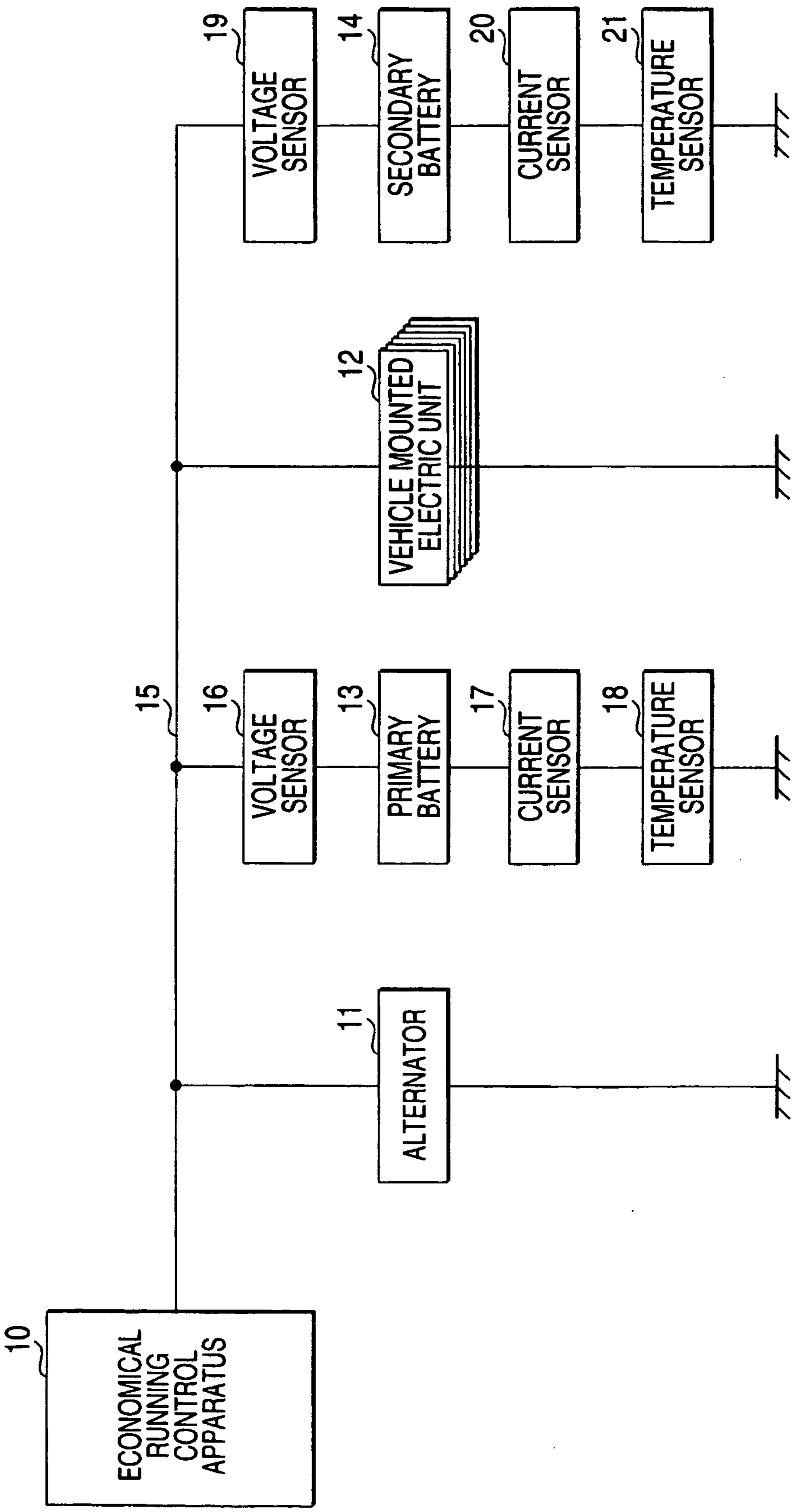

10
ECONOMICAL RUNNING CONTROL APPARATUS
11
ALTERNATOR
15
16
VOLTAGE SENSOR
13
PRIMARY BATTERY
17
CURRENT SENSOR
18
TEMPERATURE SENSOR
12
VEHICLE MOUNTED ELECTRIC UNIT
19
VOLTAGE SENSOR
14
SECONDARY BATTERY
20
CURRENT SENSOR
21
TEMPERATURE SENSOR

FIG. 2

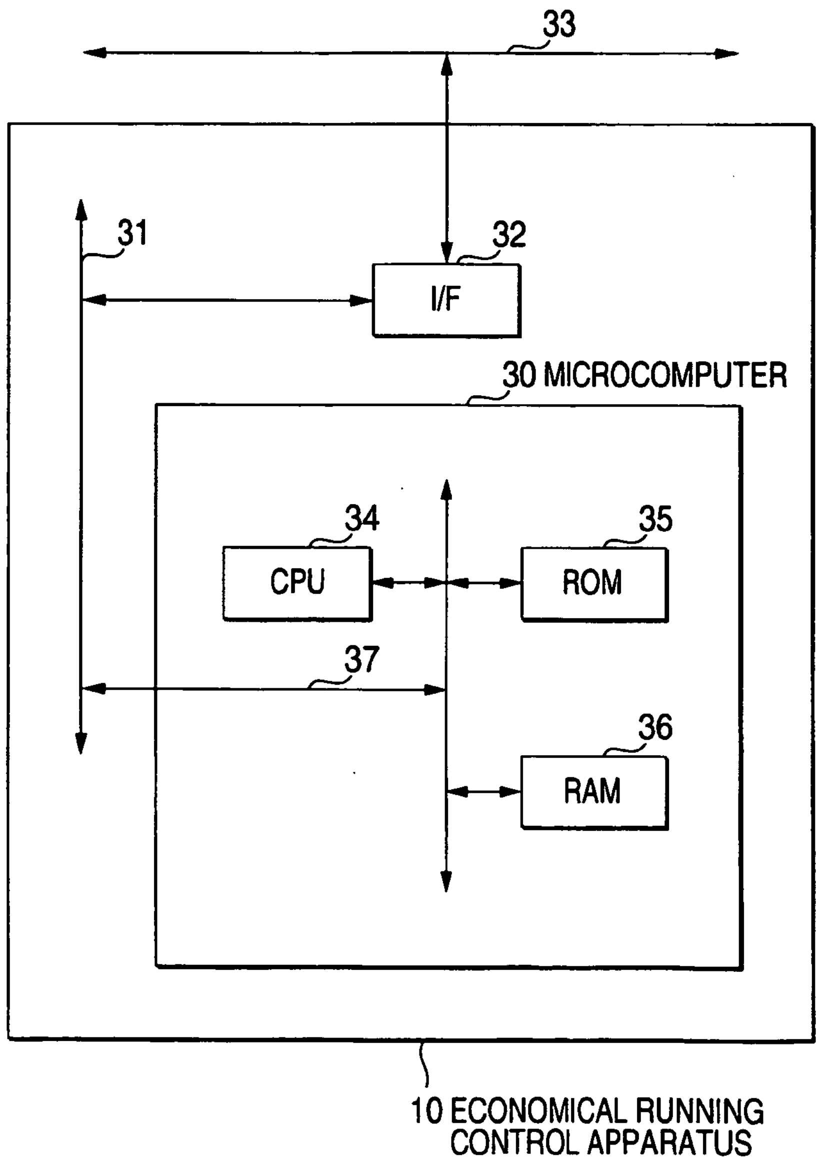
33
31
32
I/F
30 MICROCOMPUTER
34
CPU
35
ROM
37
36
RAM
10 ECONOMICAL RUNNING CONTROL APPARATUS

FIG. 3

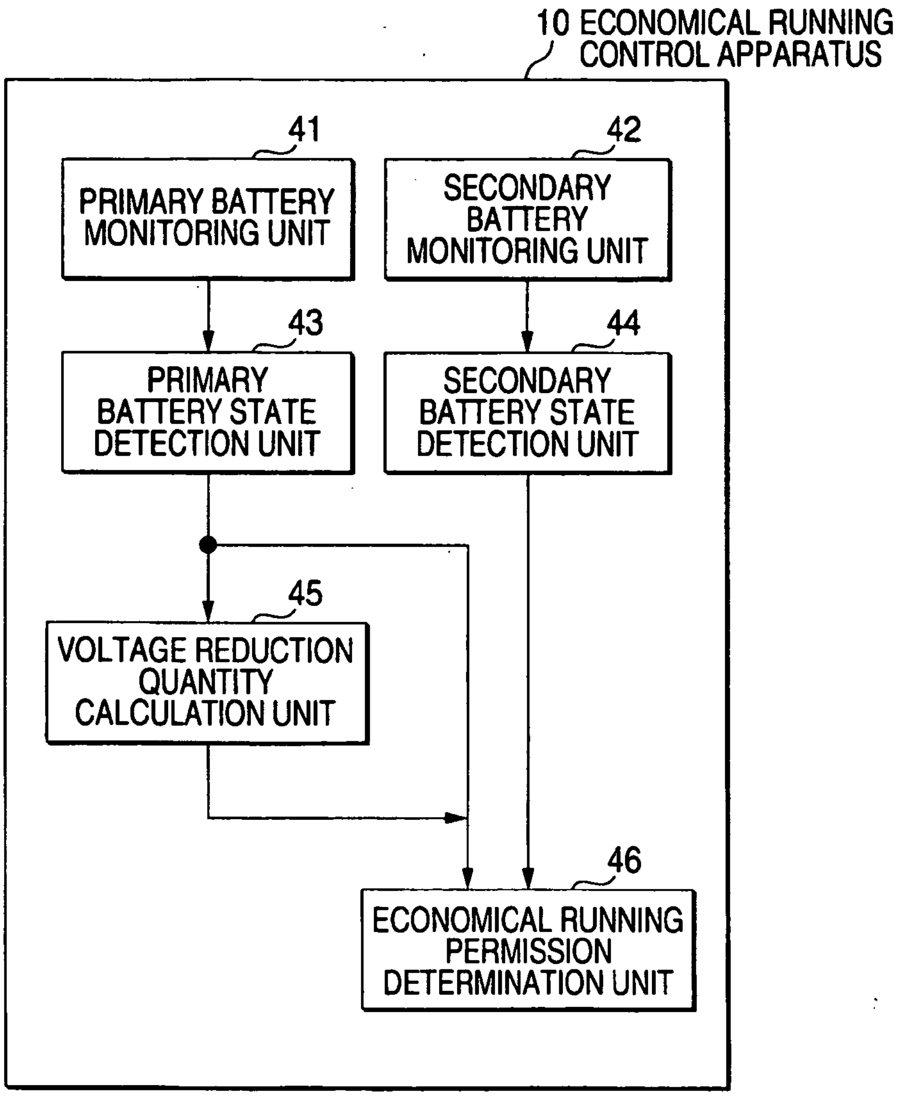
10 ECONOMICAL RUNNING CONTROL APPARATUS
41
PRIMARY BATTERY MONITORING UNIT
42
SECONDARY BATTERY MONITORING UNIT
43
PRIMARY BATTERY STATE DETECTION UNIT
44
SECONDARY BATTERY STATE DETECTION UNIT
45
VOLTAGE REDUCTION QUANTITY CALCULATION UNIT
46
ECONOMICAL RUNNING PERMISSION DETERMINATION UNIT

FIG. 4

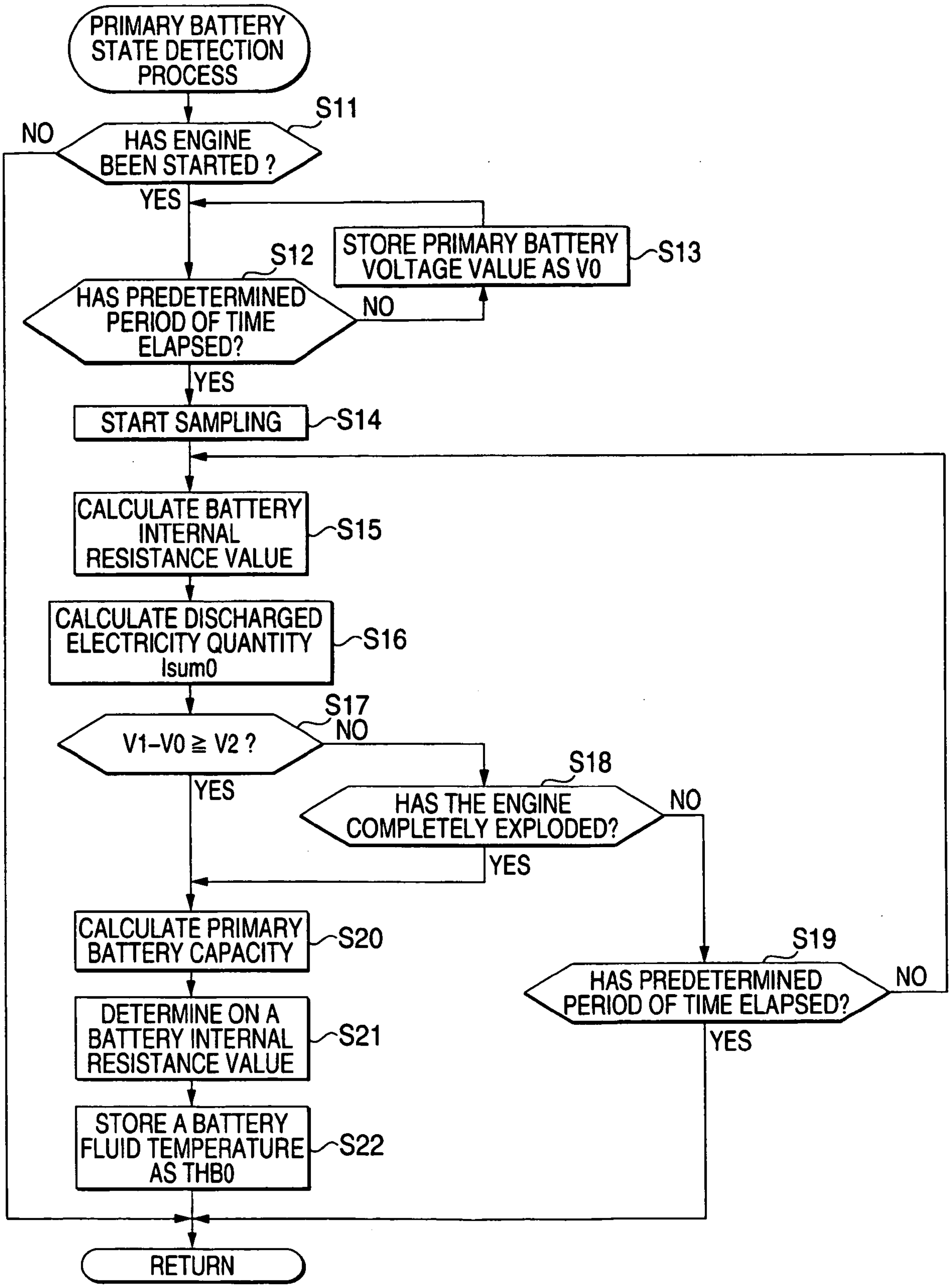
PRIMARY BATTERY STATE DETECTION PROCESS
S11
HAS ENGINE BEEN STARTED ?
NO
YES
S12
HAS PREDETERMINED PERIOD OF TIME ELAPSED?
NO
STORE PRIMARY BATTERY VOLTAGE VALUE AS V0
S13
YES
START SAMPLING
S14
CALCULATE BATTERY INTERNAL RESISTANCE VALUE
S15
CALCULATE DISCHARGED ELECTRICITY QUANTITY Isum0
S16
S17
V1−V0 ≧ V2 ?
NO
YES
S18
HAS THE ENGINE COMPLETELY EXPLODED?
NO
YES
CALCULATE PRIMARY BATTERY CAPACITY
S20
S19
HAS PREDETERMINED PERIOD OF TIME ELAPSED?
NO
YES
DETERMINE ON A BATTERY INTERNAL RESISTANCE VALUE
S21
STORE A BATTERY FLUID TEMPERATURE AS THB0
S22
RETURN

FIG. 5

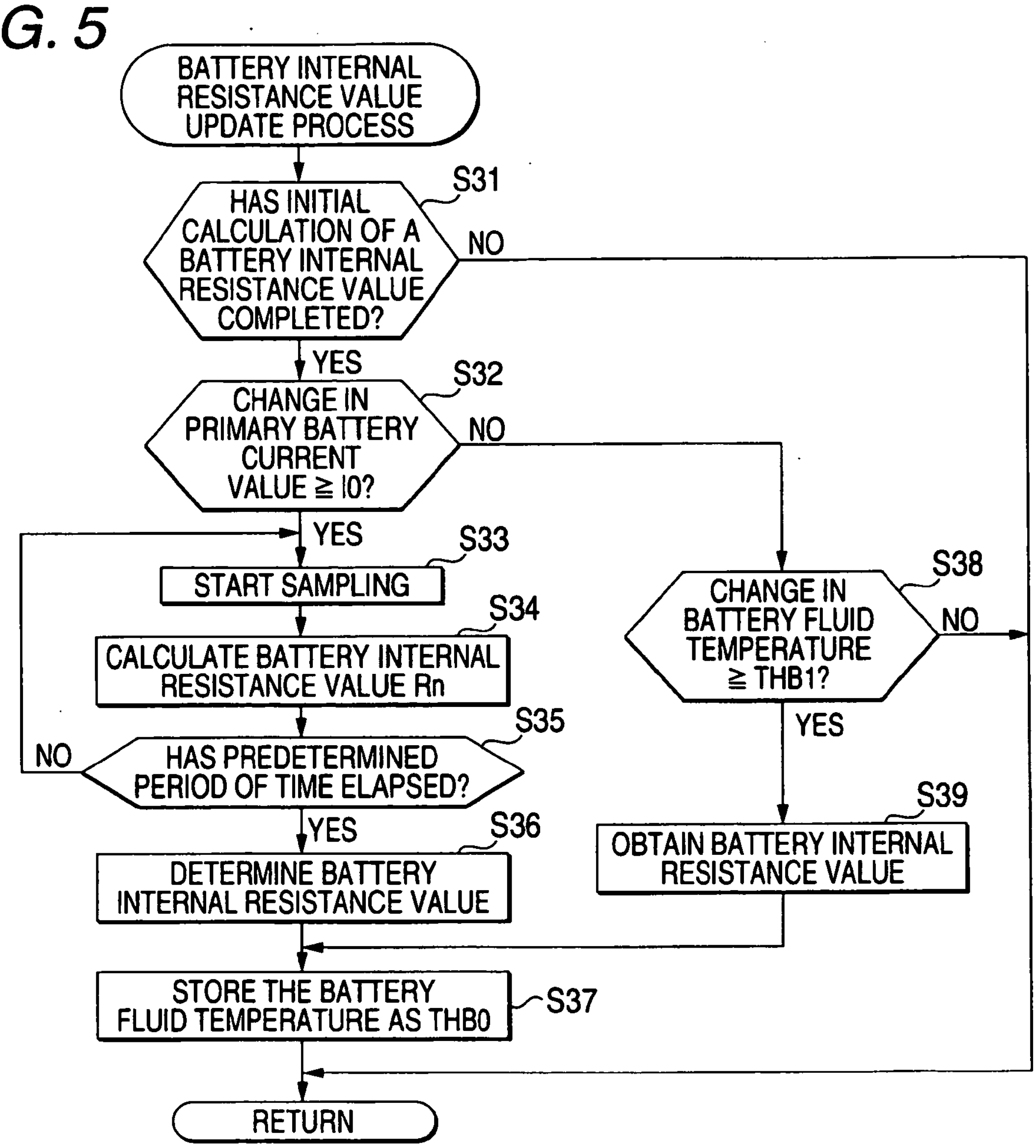
BATTERY INTERNAL RESISTANCE VALUE UPDATE PROCESS
S31
HAS INITIAL CALCULATION OF A BATTERY INTERNAL RESISTANCE VALUE COMPLETED?
NO
YES
S32
CHANGE IN PRIMARY BATTERY CURRENT VALUE ≧ I0?
NO
YES
S33
START SAMPLING
S34
CALCULATE BATTERY INTERNAL RESISTANCE VALUE Rn
S35
NO
HAS PREDETERMINED PERIOD OF TIME ELAPSED?
YES
S36
DETERMINE BATTERY INTERNAL RESISTANCE VALUE
S38
CHANGE IN BATTERY FLUID TEMPERATURE ≧ THB1?
NO
YES
S39
OBTAIN BATTERY INTERNAL RESISTANCE VALUE
STORE THE BATTERY FLUID TEMPERATURE AS THB0
S37
RETURN

FIG. 6

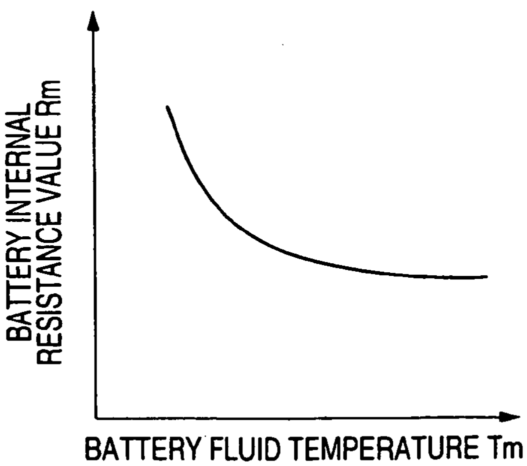
BATTERY INTERNAL RESISTANCE VALUE Rm
BATTERY FLUID TEMPERATURE Tm

FIG. 7

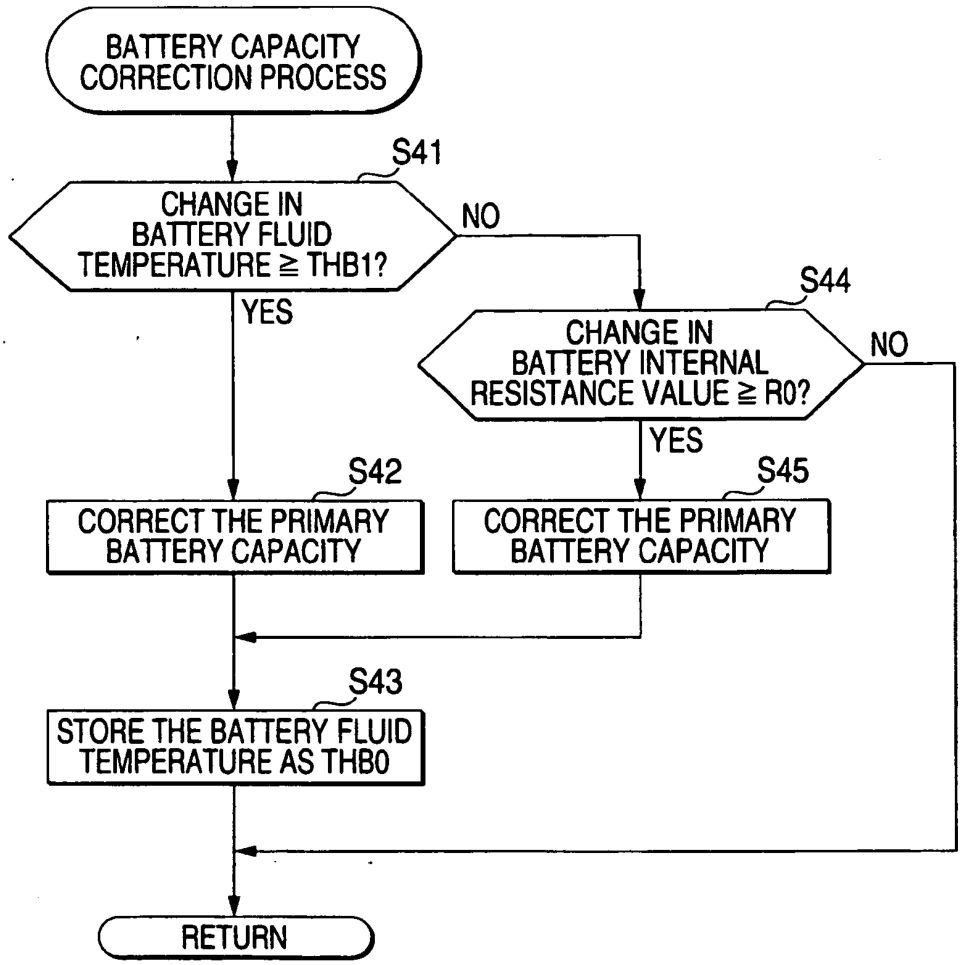
BATTERY CAPACITY CORRECTION PROCESS
S41
CHANGE IN BATTERY FLUID TEMPERATURE ≧ THB1?
NO
YES
S44
CHANGE IN BATTERY INTERNAL RESISTANCE VALUE ≧ R0?
NO
YES
S42
CORRECT THE PRIMARY BATTERY CAPACITY
S45
CORRECT THE PRIMARY BATTERY CAPACITY
S43
STORE THE BATTERY FLUID TEMPERATURE AS THB0
RETURN

FIG. 8

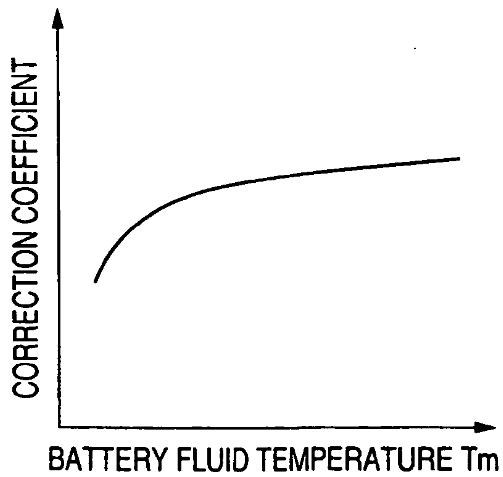
CORRECTION COEFFICIENT
BATTERY FLUID TEMPERATURE Tm

FIG. 9

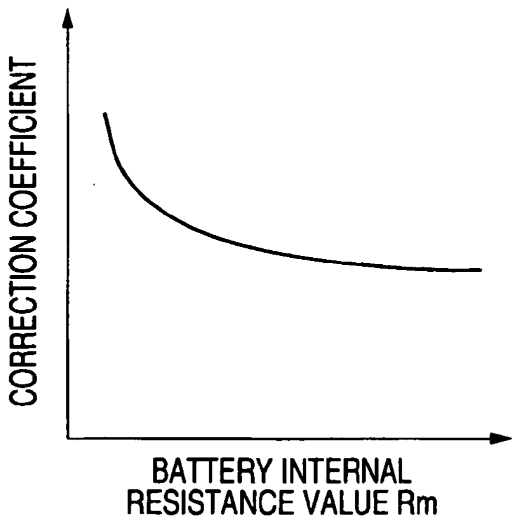
CORRECTION COEFFICIENT
BATTERY INTERNAL
RESISTANCE VALUE Rm

FIG. 10

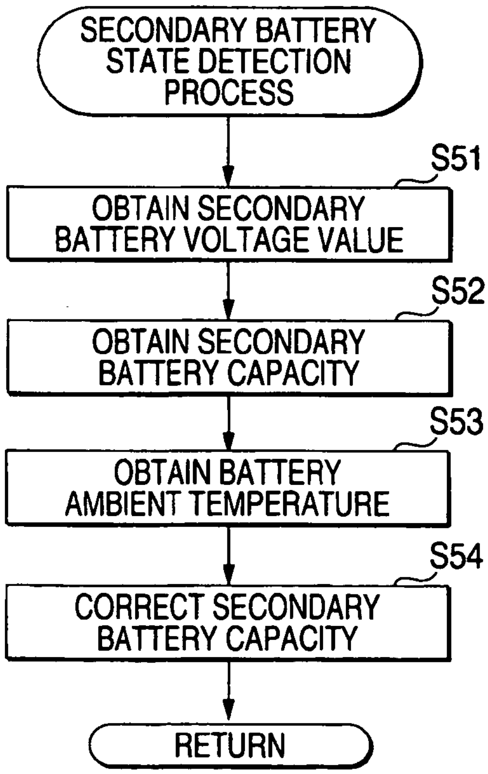
SECONDARY BATTERY
STATE DETECTION
PROCESS
S51
OBTAIN SECONDARY
BATTERY VOLTAGE VALUE
S52
OBTAIN SECONDARY
BATTERY CAPACITY
S53
OBTAIN BATTERY
AMBIENT TEMPERATURE
S54
CORRECT SECONDARY
BATTERY CAPACITY
RETURN

FIG. 11

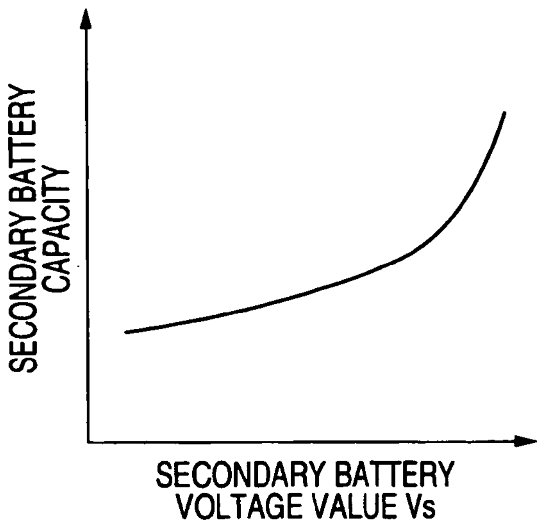
SECONDARY BATTERY CAPACITY
SECONDARY BATTERY VOLTAGE VALUE Vs

FIG. 12

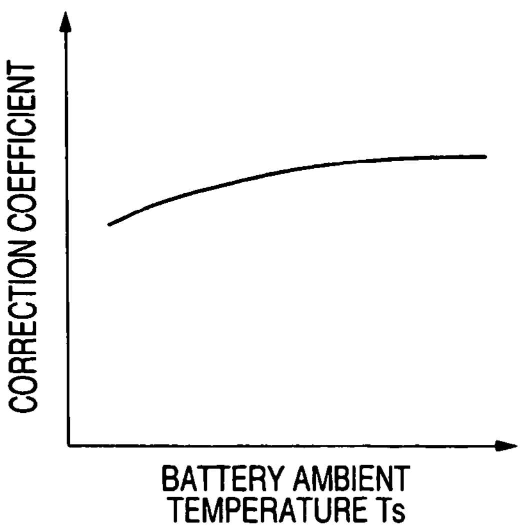
CORRECTION COEFFICIENT
BATTERY AMBIENT TEMPERATURE Ts

FIG. 13

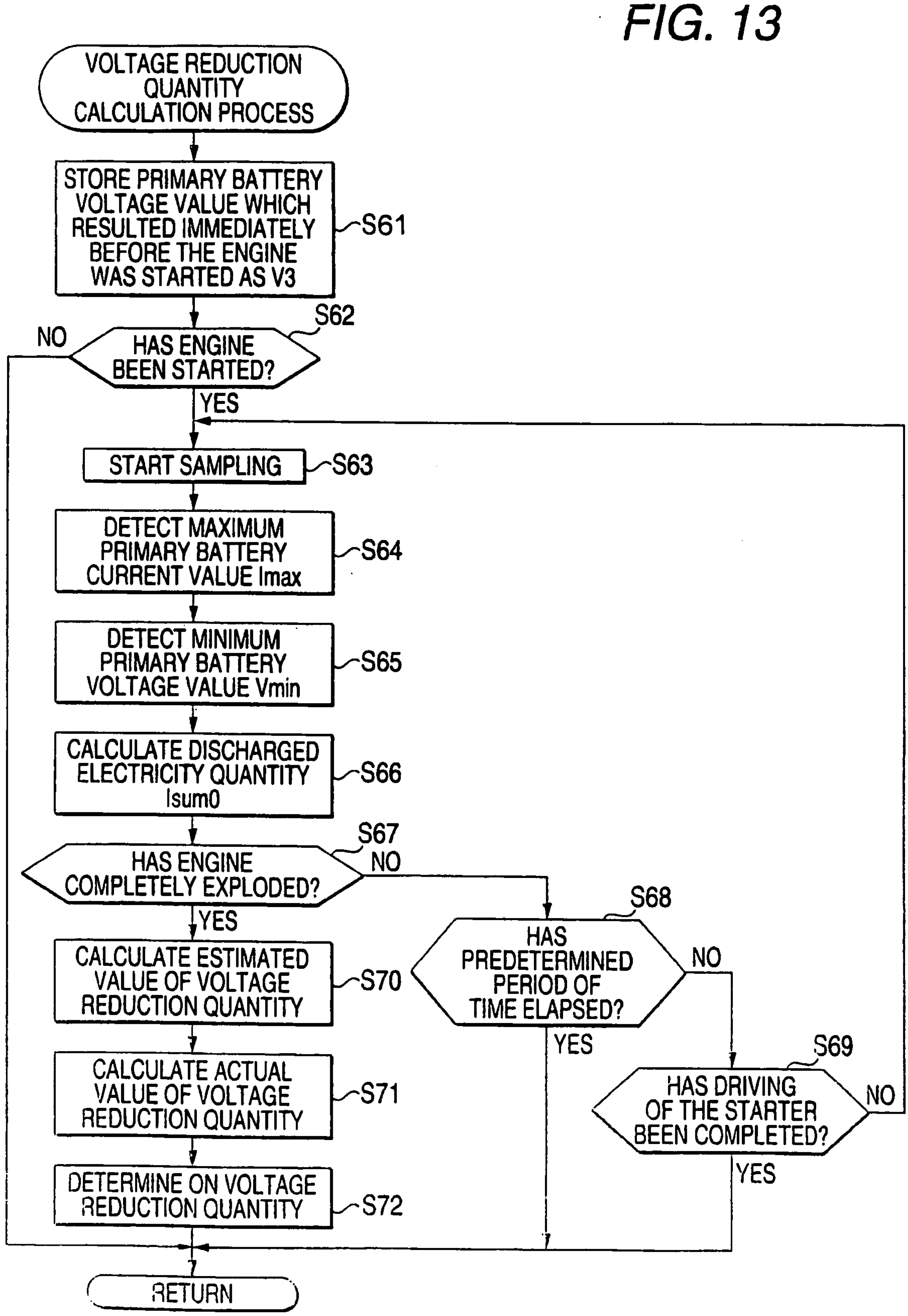
VOLTAGE REDUCTION QUANTITY CALCULATION PROCESS
STORE PRIMARY BATTERY VOLTAGE VALUE WHICH RESULTED IMMEDIATELY BEFORE THE ENGINE WAS STARTED AS V3
S61
S62
HAS ENGINE BEEN STARTED?
NO
YES
START SAMPLING
S63
DETECT MAXIMUM PRIMARY BATTERY CURRENT VALUE Imax
S64
DETECT MINIMUM PRIMARY BATTERY VOLTAGE VALUE Vmin
S65
CALCULATE DISCHARGED ELECTRICITY QUANTITY Isum0
S66
S67
HAS ENGINE COMPLETELY EXPLODED?
NO
YES
S68
HAS PREDETERMINED PERIOD OF TIME ELAPSED?
NO
YES
S69
HAS DRIVING OF THE STARTER BEEN COMPLETED?
NO
YES
CALCULATE ESTIMATED VALUE OF VOLTAGE REDUCTION QUANTITY
S70
CALCULATE ACTUAL VALUE OF VOLTAGE REDUCTION QUANTITY
S71
DETERMINE ON VOLTAGE REDUCTION QUANTITY
S72
RETURN

FIG. 14

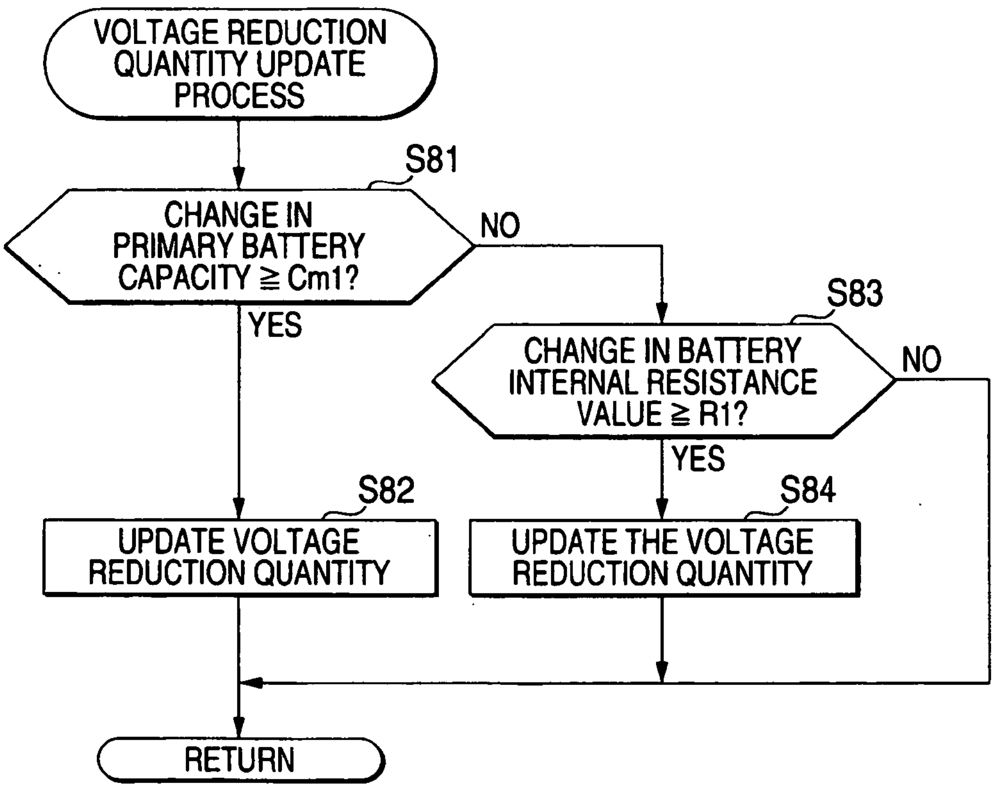
VOLTAGE REDUCTION QUANTITY UPDATE PROCESS
S81
CHANGE IN PRIMARY BATTERY CAPACITY ≧ Cm1?
NO
YES
S83
CHANGE IN BATTERY INTERNAL RESISTANCE VALUE ≧ R1?
NO
YES
S82
UPDATE VOLTAGE REDUCTION QUANTITY
S84
UPDATE THE VOLTAGE REDUCTION QUANTITY
RETURN

FIG. 15

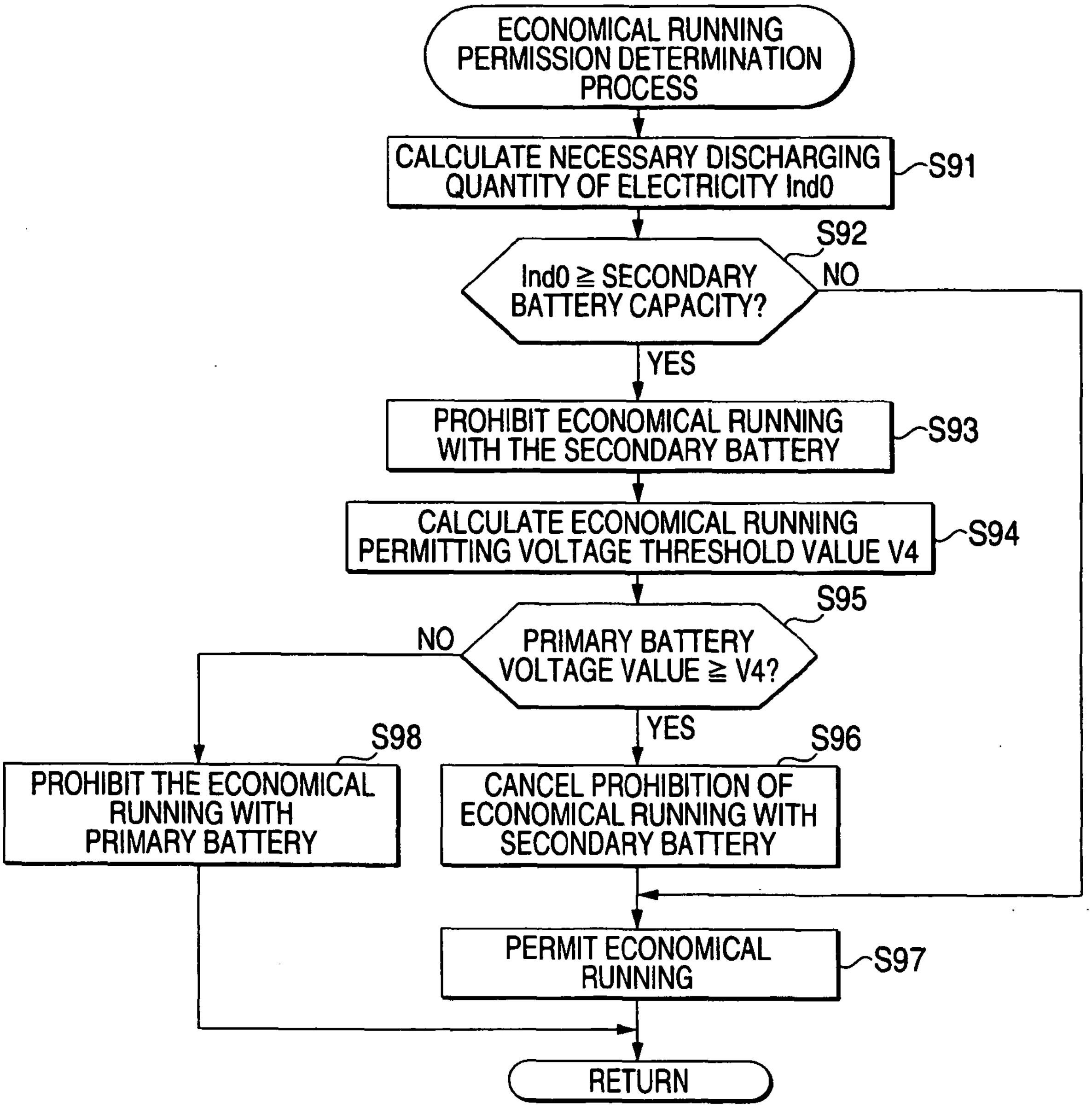
ECONOMICAL RUNNING PERMISSION DETERMINATION PROCESS
CALCULATE NECESSARY DISCHARGING QUANTITY OF ELECTRICITY Ind0
S91
S92
Ind0 ≧ SECONDARY BATTERY CAPACITY?
NO
YES
PROHIBIT ECONOMICAL RUNNING WITH THE SECONDARY BATTERY
S93
CALCULATE ECONOMICAL RUNNING PERMITTING VOLTAGE THRESHOLD VALUE V4
S94
S95
PRIMARY BATTERY VOLTAGE VALUE ≧ V4?
NO
YES
S98
PROHIBIT THE ECONOMICAL RUNNING WITH PRIMARY BATTERY
S96
CANCEL PROHIBITION OF ECONOMICAL RUNNING WITH SECONDARY BATTERY
PERMIT ECONOMICAL RUNNING
S97
RETURN

FIG. 16

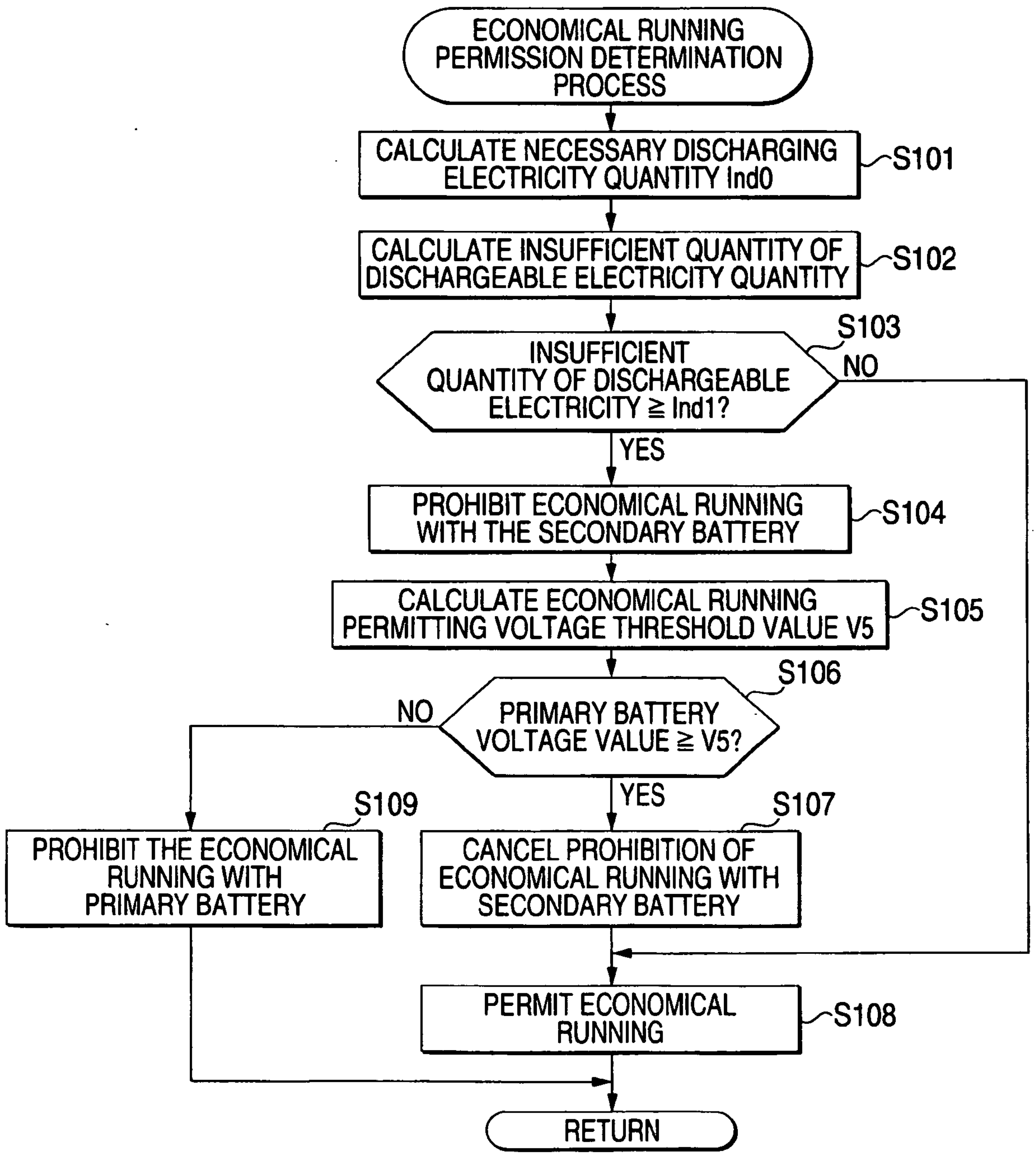
ECONOMICAL RUNNING PERMISSION DETERMINATION PROCESS
CALCULATE NECESSARY DISCHARGING ELECTRICITY QUANTITY Ind0
S101
CALCULATE INSUFFICIENT QUANTITY OF DISCHARGEABLE ELECTRICITY QUANTITY
S102
S103
INSUFFICIENT QUANTITY OF DISCHARGEABLE ELECTRICITY ≧ Ind1?
NO
YES
PROHIBIT ECONOMICAL RUNNING WITH THE SECONDARY BATTERY
S104
CALCULATE ECONOMICAL RUNNING PERMITTING VOLTAGE THRESHOLD VALUE V5
S105
S106
PRIMARY BATTERY VOLTAGE VALUE ≧ V5?
NO
YES
S109
PROHIBIT THE ECONOMICAL RUNNING WITH PRIMARY BATTERY
S107
CANCEL PROHIBITION OF ECONOMICAL RUNNING WITH SECONDARY BATTERY
PERMIT ECONOMICAL RUNNING
S108
RETURN

FIG. 17

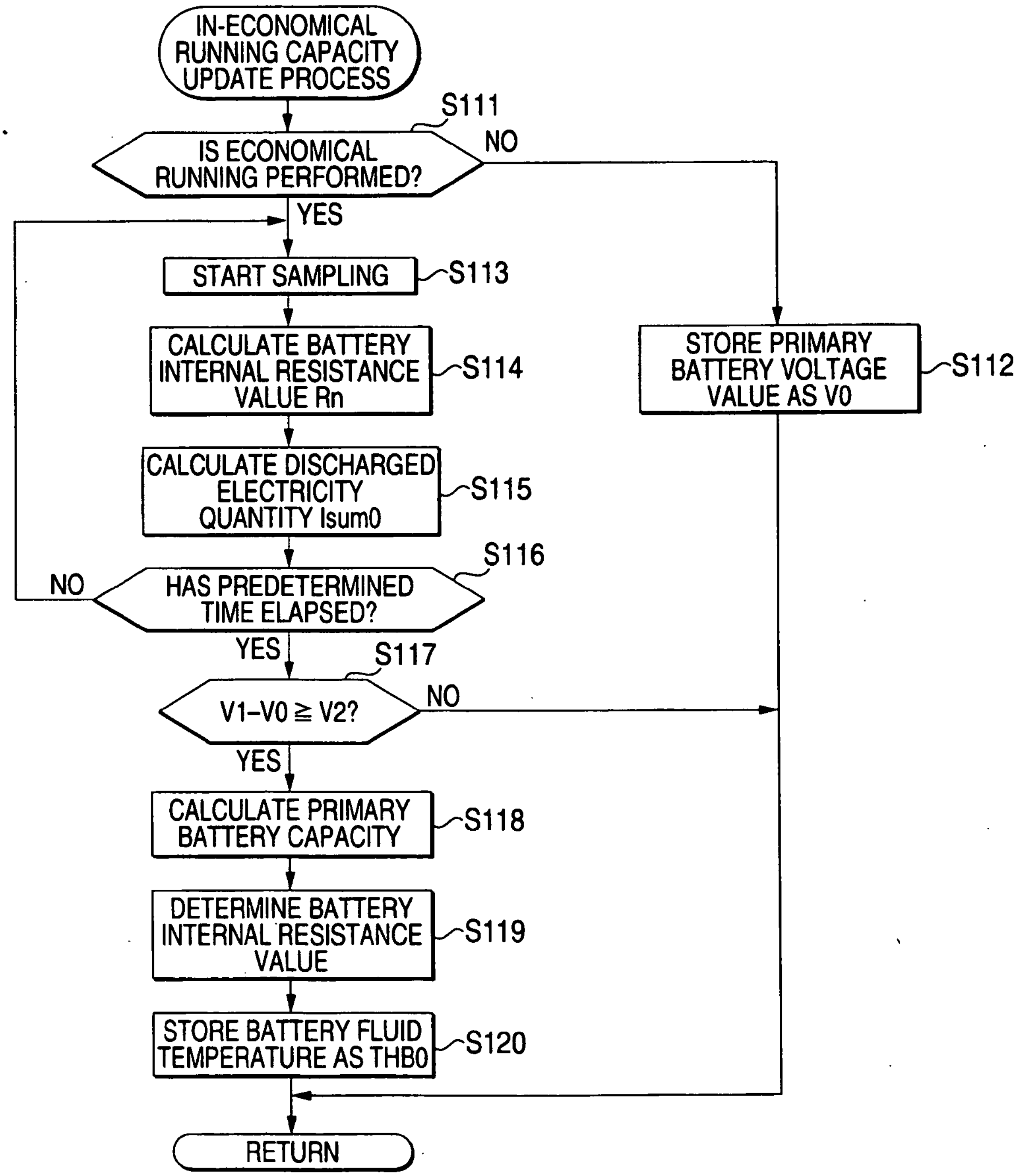
IN-ECONOMICAL RUNNING CAPACITY UPDATE PROCESS
S111
IS ECONOMICAL RUNNING PERFORMED?
NO
YES
START SAMPLING
S113
CALCULATE BATTERY INTERNAL RESISTANCE VALUE Rn
S114
STORE PRIMARY BATTERY VOLTAGE VALUE AS V0
S112
CALCULATE DISCHARGED ELECTRICITY QUANTITY Isum0
S115
S116
NO
HAS PREDETERMINED TIME ELAPSED?
YES
S117
V1-V0 ≧ V2?
NO
YES
CALCULATE PRIMARY BATTERY CAPACITY
S118
DETERMINE BATTERY INTERNAL RESISTANCE VALUE
S119
STORE BATTERY FLUID TEMPERATURE AS THB0
S120
RETURN

FIG. 18

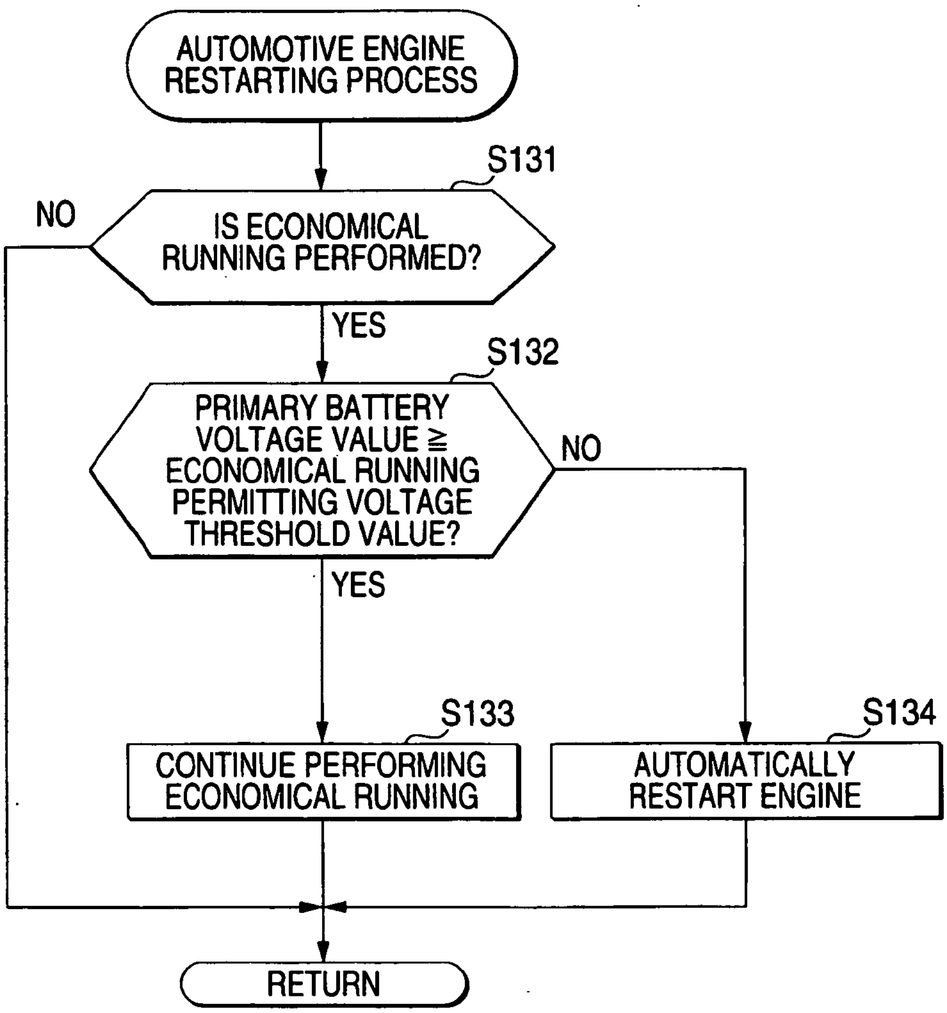
AUTOMOTIVE ENGINE RESTARTING PROCESS
S131
IS ECONOMICAL RUNNING PERFORMED?
NO
YES
S132
PRIMARY BATTERY VOLTAGE VALUE ≧ ECONOMICAL RUNNING PERMITTING VOLTAGE THRESHOLD VALUE?
NO
YES
S133
CONTINUE PERFORMING ECONOMICAL RUNNING
S134
AUTOMATICALLY RESTART ENGINE
RETURN

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002115578 A
- JP 2004251234 A
- EP 1207289 A